# EUROPÄISCHE PATENTSCHRIFT

(11) **EP 3 591 121 B1**
(45) Veröffentlichungstag und Bekanntmachung des Hinweises auf die Patenterteilung: **26.07.2023**
(21) Anmeldenummer: 19181356.7
(22) Anmeldetag: 19.06.2019
(51) Int. Cl.: E01C 23/06, E01C 23/088, E21C 25/10, E21C 35/18

(54) **VERSCHLEISSBAUTEIL EINER FRÄSMASCHINE, FRÄSMASCHINE UND VERFAHREN ZUR BESTIMMUNG DES VERSCHLEISSES DES VERSCHLEISSBAUTEILS**
WEAR COMPONENT OF A MILLING MACHINE, MILLING MACHINE AND METHOD FOR DETERMINING WEAR OF THE WEAR COMPONENT
COMPOSANT D'USURE D'UNE MACHINE À FRAISER, MACHINE À FRAISER ET PROCÉDÉ DE DÉTERMINATION DE L'USURE DU COMPOSANT D'USURE

(30) Priorität: 02.07.2018 DE 102018115959
(43) Veröffentlichungstag der Anmeldung: 08.01.2020
(73) Patentinhaber: Wirtgen GmbH, 53578 Windhagen (DE)
(72) Erfinder: SCHWALBACH, Lothar, 53567 Asbach (DE); BRÜCK, Matthias, 5443 Niederrohrdorf (CH)
(74) Vertreter: Herrmann, Jochen

(56) Entgegenhaltungen:
- DE-A1- 3 317 800
- DE-C1- 4 415 824
- JP-A- H03 259 702
- US-A1- 2017 011 564

## Beschreibung

Die Erfindung betrifft ein Verschleißbauteil für eine Fräsmaschine gemäß dem Oberbegriff des Anspruchs 1.

Die Erfindung betrifft auch eine Fräsmaschine, insbesondere eine Straßenfräsmaschine, einen Stabilisierer, einen Recycler, einen Surface Miner oder dergleichen, wobei die Fräsmaschine Verschleißbauteile, insbesondere Meißel, Meißelhalter, Basisträger eines Werkzeugsystems, Auswerfer und/oder Verschleißkufen aufweist.

Die Erfindung betrifft auch ein Verfahren zur Bestimmung des Verschleißes eines gemäß Anspruch 1 ausgeführten Verschleißbauteils einer Fräsmaschine, insbesondere einer Straßenfräsmaschine eines Stabilisierers, eines Recyclers, eines Surface Miners oder dergleichen, wobei dem Verschleißbauteil zumindest ein berührungslos auslesbares elektronisches Bauteil zugeordnet ist, wobei Daten des zumindest einen berührungslos auslesbaren elektronischen Bauteils von einem Lesegerät berührungslos ausgelesen werden, und wobei an Hand der ausgelesenen Daten der Verschleiß des Verschleißbauteils bestimmt wird.

Aus der US 2017/0011564 A1 ist ein Überwachungssystem für Meißel einer Fräswalze bekannt. Jedem Meißel ist zumindest ein Transmitter, beispielsweise in Form eines RFID-Transmitters, zugeordnet. Der Transmitter steht in Funkverbindung mit einem an der Fräsmaschine angeordneten Empfänger und über diesen mit einem Auswertesystem. Auf Basis eines Signals eines Transmitters erkennt das Auswertesystem den Verlust oder einen unzulässigen Verschleiß eines Meißels. Dabei schließt das System auf einen Verlust oder auf einen unzulässigen Verschleiß, wenn ein oder mehrere Signale eines oder mehrerer Transmitter ausfallen. Sind zwei oder mehrere Transmitter einem Meißel zugeordnet, so wird auf einen Verlust oder einen Bruch des Meißels geschlossen, wenn die Signale aller dem Meißel zugeordneten Transmitter ausbleiben. Fällt das Signal eines Transmitters aus und das Signal eines zweiten dem Meißel zugeordneten Transmitters wird weiter Empfang, wird auf das Erreichen einer Verschleißgrenze geschlossen. Entsprechend einer beschriebenen Ausführungsvariante wird die Einsatzdauer der Meißel von der Montage bis zum Ausfall eines oder mehrerer Transmitter erfasst und, beispielsweise in Kombination mit weiteren Betriebsparametern der Fräsmaschine, zur Bestimmung einer Lebenserwartung der Meißel oder für die Planung effizienterer Betriebsbedingungen bei künftigen Fräsaufgaben verwendet.

Nachteilig erkennt das Überwachungssystem den Verschleiß eines Meißels erst, wenn eine Verschleißgrenze erreicht ist. Dies gibt einem Maschinenführer wenig Spielraum, einen anstehenden Austausch des Meißels in einen günstigen Wartungszeitraum, beispielsweise einen geplanten Stillstand der Fräsmaschine, zu legen und auf diese Weise zusätzliche Stillstandzeiten zu vermeiden. Ein weiterer Nachteil ergibt sich daraus, dass der Transmitter derart angeordnet werden muss, dass er über entsprechende Funksignale ausgewertet werden kann. Dies ist bei metallischen und damit elektromagnetische Wellen abschirmenden Meißeln nur bei oberflächennah eingebauten Transmittern möglich. Ein im Bereich einer Verschleißgrenze eines Meißels eingebauter Transmitter ist nicht oder zumindest nicht über eine größere Entfernung auslesbar.

Aus der DE 10 2014 104 741 A1 ist ein RFID-Sensor-Tag bekannt, der einen Steckverbinder aufweist, über den verschiedene Sensoren an den RFID-Sensor-Tag angeschlossen werden können. Die vorzugsweise analogen Sensorsignale können über einen A/D-Wandler digitalisiert und in einem Datenspeicher gespeichert werden. Bei dem von dem Sensor übertragenen Messwert kann es sich um einen elektrischen Widerstand handeln. Die Messdaten können an ein RFID-Lesegerät übertragen werden.

Dokument DE 44 15 824 C1 offenbart eine Werkzeuganordnung mit einem Meißelhalter auf dem eine Meißelhalterhülle mit einer Sensorhülle aufgebracht ist.

Die Sensorhülle ist dabei direkt auf die Oberfläche des Meißelhalters aufgebracht und ist von einer Schutzhülle umgeben. Weiterhin besitzt die Sensorhülle eine Transponderantenne und einen integrierten Transponder-Chip. Bei Erreichen der Verschleißgrenze des Meißels wird die Transponderantenne oder den Transponder-Chip beschädigt. Infolgedessen ändert sich das auslesbare Signal der Transponderantenne, um den Verschleiß des Meißels zu signalisieren.

Der Erfindung liegt die Aufgabe zu Grunde, ein Verschleißbauteil einer Fräsmaschine bzw. eine Fräsmaschine zu schaffen, welche auf Grund einer optimierten Wartung einen wirtschaftlichen Betrieb und ein besseres Fräsergebnis ermöglicht.

Es ist weiterhin Aufgabe der Erfindung, ein Verfahren bereitzustellen, welches einen wirtschaftlichen Betrieb der Fräsmaschine ermöglicht.

Die das Verschleißbauteil betreffende Aufgabe der Erfindung wird dadurch gelöst, dass zumindest ein Sensor mit zumindest einem berührungslos auslesbaren elektronischen Bauteil zur Übertragung von Daten verbunden ist, dass das berührungslos auslesbare elektronische Bauteil dazu ausgebildet ist, Messdaten des Sensors zu empfangen und für ein berührungsloses Auslesen bereitzustellen und dass zumindest ein Messabschnitt des Sensors entlang zumindest einer zu überwachenden Verschleißrichtung in einen Verschleißbereich des Verschleißbauteils geführt ist. Der Sensor umfasst zumindest den Messabschnitt und vorzugsweise eine zugehörige Elektronik (Messschaltung), um eine physikalische Größe des Messabschnitts zu erfassen und in ein von der physikalischen Größe abhängiges Messsignal zu wandeln. Dabei ist der Messabschnitt derart ausgelegt, dass sich die physikalische Größe mit einer Änderung der Länge des Verschleißbereichs entlang der Verschleißrichtung ändert. Bei einem fortschreitenden Verschleiß des Verschleißbereichs entlang der Verschleißrichtung ändert sich der Wert der physikalischen Größe und damit des Messsignals. Die an das berührungslos auslesbare elektronische Bauteil übertragenen Messdaten können durch das Messsignal gebildet sein. Es kann jedoch auch innerhalb des Sensors eine Wandlung des Messsignals, beispielsweise von einer analogen in eine digitale Form, erfolgen, so dass entsprechend digitalisierte Messdaten von dem Sensor zu dem berührungslos auslesbaren elektronischen Bauteil geleitet werden. Die Messdaten werden von dem berührungslos auslesbaren elektronischen Bauteil aufgenommen und für ein berührungsloses Auslesen bereitgestellt.

Vorteilhaft ermöglicht der Sensor die Bestimmung der verbleibenden Länge des Verschleißbereichs entlang der Verschleißrichtung und damit des aktuellen Verschleißzustandes des Verschleißbauteils. Die entsprechenden Messdaten können über das berührungslos auslesbare elektronische Bauteil ausgelesen und ausgewertet werden. Es kann somit jederzeit auf eine aktuelle Angabe zum Verschleißzustand des Verschleißbauteils zurückgegriffen werden, wodurch eine vorausschauende Planung von Wartungsarbeiten, beispielsweise eines anstehenden Austauschs des Verschleißbauteils, ermöglicht wird. Zusätzliche Stillstandzeiten der Fräsmaschine, beispielswese bei einem unerwarteten Erreichen einer Verschleißgrenze des Verschleißbauteils, können vermieden werden. Verschiedene Verschleißbauteile der Fräsmaschine, welche sich der jeweiligen Verschleißgrenze nähern, können in einem Wartungsintervall ausgetauscht werden. Wenig verschlissene Verschleißbauteile werden erkannt und können weiter verwendet werden. Es ermöglicht sich dadurch ein wirtschaftlicher Betrieb der Fräsmaschine. Die Verschleißbauteile werden nicht über ihre jeweilige Verschleißgrenze hinaus verwendet, so dass eine hohe Fräsqualität erhalten bleibt. Sie werden aber auch nicht vorzeitig ausgetauscht, so dass Ersatzteilkosten gering gehalten werden.

Vorteilhaft ist nur der Messabschnitt des Sensors in den Verschleißbereich geführt. Das berührungslos auslesbare elektronische Bauteil kann in einem Bereich angeordnet werden, welcher ein berührungsloses Auslesen der Messdaten auch über größere Distanzen ermöglicht. Bevorzugt beträgt die Distanz, über welche die Messdaten ausgelesen werden können, mindestens 10mm, besonders bevorzugt wenigstens 20mm.

Entsprechend einer besonders bevorzugten Ausgestaltungsvariante der Erfindung kann es vorgesehen sein, dass eine Abrasion des Messabschnitts zu einer kontinuierlichen oder zu einer diskontinuierlichen Veränderung eines Messsignals des Sensors führt. Der in den Verschleißbereich des Verschleißbauteils geführte Messabschnitt wird zusammen mit dem Verschleißbauteil abgetragen, was zu einer Veränderung des Wertes der an dem Messabschnitt ermittelten physikalischen Größe und damit des Messsignals führt. Ein sich kontinuierlich mit einem fortschreitenden Verschleiß des Verschleißbauteils änderndes Messsignal ermöglicht eine kontinuierliche Bestimmung einer Verschleißlänge als Maß zwischen einer Verschleißgrenze und einer Oberfläche des Verschleißbauteils entlang der Verschleißrichtung und damit der kontinuierlichen Bestimmung des Verschleißzustandes des Verschleißbauteils. Ein sich auf Grund der Abrasion diskontinuierlich änderndes Messsignal ist einfach auswertbar, da beispielsweise keine Kalibrierung des Sensors erfolgen und lediglich die Anzahl der Veränderungen des Messsignals ausgewertet werden muss, um die verbleibende Verschleißlänge zu bestimmen. Dabei sind die Abstände entlang der Verschleißrichtung, welche zu einer Veränderung des Messsignals führen, so klein zu wählen, dass eine gewünschte Genauigkeit bei der Bestimmung der verbleibenden Verschleißlänge erreicht wird.

Vorzugsweise kann es vorgesehen sein, dass der Sensor oder ein Teil des Sensors, insbesondere eine Messschaltung des Sensors, integraler Bestandteil des berührungslos auslesbaren elektronischen Bauteils ist oder dass der Sensor lösbar, vorzugsweise über eine Steckverbindung, mit dem berührungslos auslesbaren elektronischen Bauteil elektrisch verbunden ist oder dass der Sensor über eine feste elektrische Verbindung mit dem berührungslos auslesbaren elektronischen Bauteil verbunden ist oder dass der Sensor über eine Funkverbindung mit dem berührungslos auslesbaren elektronischen Bauteil verbunden ist. Die Integration des Sensors oder eines Teils des Sensors in das berührungslos auslesbare elektronische Bauteil ergibt einen einfachen, kostengünstigen und robusten Aufbau, da beispielsweise ein gemeinsames Gehäuse verwendet werden kann, keine äußeren und damit fehleranfälligen elektrischen Schnittstellen zwischen dem Sensor und dem berührungslos auslesbaren elektronischen Bauteil vorzusehen sind und das berührungslos auslesbare elektronische Bauteil und der Sensor als integrales Bauelement in einem Arbeitsschritt montiert werden können. Eine lösbare Verbindung zwischen dem Sensor und dem berührungslos auslesbaren elektronischen Bauteil ermöglicht es, den Sensor und das berührungslos auslesbare elektronische Bauteil an unterschiedlichen Stellen zu montieren. So kann der Sensor derart angeordnet werden, dass sein Messabschnitt in den oder entlang von dem Verschleißbereich des Verschleißbauteils geführt ist, während das berührungslos auslesbare elektronische Bauteil an einer Position angeordnet werden kann, die ein einfaches berührungsloses Auslesen über eine ausreichend große Distanz ermöglicht. Die Kopplung über eine Steckverbindung gewährleistet eine einfache Montage. Durch die separate Ausbildung des Sensors und des berührungslos auslesbaren elektronischen Bauteils können diese für ihre Aufgaben in Form, Robustheit und Funktion optimiert ausgebildet werden und sind lediglich an ihrer Schnittstelle aufeinander abzustimmen. Es können auch mit entsprechenden Schnittstellen versehene, verfügbare Sensoren und berührungslos auslesbare elektronische Bauteile kombiniert werden. Vorteilhaft kann das berührungslos auslesbare elektronische Bauteil derart ausgelegt sein, dass es mit verschiedenen Sensoren kombiniert werden kann. Es können so an das gleiche berührungslos auslesbare elektronische Bauteil unterschiedliche Sensoren angeschlossen werden. So ist es denkbar, für unterschiedliche Verschleißbauteile mit beispielsweise verschieden großen Verschleißbereichen Sensoren mit unterschiedlichen Messbereichen vorzusehen, welche dann mit gleichen berührungslos auslesbaren elektronischen Bauteilen verbunden werden. Es ergibt sich ein Baukastensystem mit für den jeweiligen Anwendungsfall angepassten Sensoren und einheitlichen berührungslos auslesbaren elektronischen Bauteilen. Diese können beispielsweise mit gleichen Lesegeräten oder mit demselben Lesegerät ausgelesen werden. Denkbar ist es, dass die Steckverbindung bei der Montage des Verschleißbauteils an der Fräsmaschine in einer Montagebewegung geschlossen wird.

Weiterhin besteht bei einer lösbaren Verbindung oder einer Funkverbindung zwischen dem berührungslos auslesbaren elektronischen Bauteil und dem Sensor die Möglichkeit, das berührungslos auslesbare elektronische Bauteil (nach Verschleiß des Verschleißbauteils und damit wenigstens des Messabschnitts des Sensors) an einem weiteren Verschleißbauteil mit einem neuen Sensor wiederzuverwenden.

Eine feste kabelgebundene Verbindung zwischen dem Sensor und dem berührungslos auslesbaren elektronischen Bauteil gewährleistet auch unter rauen Umgebungsbedingungen einen störungsfreien elektrischen Kontakt, bei dem beispielsweise keine durch Korrosion erhöhten Übergangswiderstände die von dem Sensor auf das berührungslos auslesbare elektronische Bauteil übertragenen Messdaten verfälschen. Eine Funkverbindung zwischen dem Sensor und dem berührungslos auslesbaren elektronischen Bauteil ermöglicht es, diese an unterschiedlichen Positionen anzuordnen, ohne dass zwischen ihnen eine kabelgebundene Verbindung verlegt werden muss.

Besonders bevorzugt kann es vorgesehen sein, dass das oder die berührungslos auslesbaren elektronischen Bauteile durch RFID-Transponder gebildet sind. RFID-Transponder ermöglichen den berührungslosen Austausch von Daten mit einem zugeordneten Lesegerät. Sie sind in großer Stückzahl und damit kostengünstig am Markt erhältlich. RFID-Transponder können bereits eine Schnittstelle aufweisen, welche den einfachen Anschluss von Sensoren ermöglicht.

Vorzugsweise kann es vorgesehen sein, dass der RFID-Transponder ein passiver RFID-Transponder oder ein aktiver RFID-Transponder oder ein semi-aktiver RFID-Transponder ist. Passive RFID-Transponder benötigen vorteilhaft keine eigene Energiequelle und sind entsprechend kostengünstig und wartungsfrei. Sie sind klein, lassen sich einfach installieren und benötigen nur einen geringen Bauraum. Weiterhin können passive RFID-Transponder einfach installiert werden. Zum Auslesen der in einem passiven RFID-Transponder gespeicherten Daten wird dieser über die elektromagnetischen Wellen des verwendeten Lesegerätes mit Energie versorgt. Aktive RFID-Transponder besitzen eine eigene Energiequelle, insbesondere eine eigene Batterie. Sie weisen einen eigenen Sender und damit gegenüber passiven RFID-Transpondern vorteilhaft eine größere Reichweite auf. Semi-aktive RFID-Transponder besitzen ebenfalls eine eigene Batterie, welche der Energieversorgung des in dem RFID-Transponder verwendeten Mikrochips dient. Sie besitzen jedoch keinen Sender und werden lediglich durch Reflektion des von dem Lesegerät ausgesendeten, elektromagnetischen Feldes ausgelesen.

Ist es vorgesehen, dass der Sensor durch eine Batterie oder einen Akkumulator des berührungslos auslesbaren elektronischen Bauteils oder über die Energie des zum Auslesen des berührungslos auslesbaren Bauelements verwendeten elektromagnetischen Feldes mit Energie versorgt ist, so wird für den Sensor keine eigene Energiequelle benötigt. Das Verschleißbauteil mit dem eingebauten Sensor kann vor einer Verwendung über einen langen Zeitraum gelagert werden, ohne dass sich eine Energiequelle des Sensors entlädt. Bei der Montage des Verschleißbauteils oder nach einer langen Einsatzzeit ist es nicht erforderlich, den Ladezustand einer Energiequelle des Sensors zu überprüfen.

Ein einfach und diskontinuierlich den verbleibenden Verschleißbereich messender Sensor kann dadurch gebildet sein, dass der Messabschnitt des Sensors durch zwei oder mehrere entlang der zu überwachenden Verschleißrichtung beabstandet zueinander angeordnete und parallel zueinander geschaltete elektrische Widerstände gebildet ist. Gemessen wird der Gesamtwiderstand der parallel geschalteten elektrischen Widerstände. Wird eine der Widerstände während der Abrasion des Verschleißbauteils mit abgetragen, so erhöht sich der Gesamtwiderstand sprunghaft. Diese Widerstandsänderung kann messtechnisch einfach erfasst und an Hand der bekannten Position des abgetragenen Widerstandes die verbleibende Verschleißlänge bestimmt werden. Nach einer möglichen Form der Auswertung kann die verbleibende Verschleißlänge unmittelbar aus dem gemessenen Gesamtwiderstand bestimmt werden. Dies setzt eine genaue Kenntnis des Gesamtwiderstandes in Abhängigkeit von der Anzahl der verbleibenden Widerstände sowie eine ausreichend genaue Messtechnik voraus. Nach einer alternativen Auswertung kann auch die Anzahl der gemessenen Widerstandsänderungen und damit die Anzahl der abgetragenen Widerstände bestimmt und daraus auf die verbleibende Verschleißlänge des Verschleißbauteils entlang der Verschleißrichtung geschlossen werden. Vorteilhaft ist hierzu keine Kalibrierung des Sensors erforderlich, da lediglich Widerstandsänderungen nachzuweisen sind und keine exakte Widerstandsmessung erforderlich ist.

Eine messtechnisch einfache, kontinuierliche Bestimmung der Verschleißlänge kann dadurch erreicht werden, dass der Messabschnitt des Sensors durch ein Widerstandselement gebildet ist und dass sich der Widerstand des Widerstandselements durch Abrasion des Widerstandselements verändert. Das Widerstandselement kann beispielsweise durch ein beidseitig kontaktiertes Widerstandsmaterial mit einer quer zu der Stromrichtung eines verwendeten Messstroms verlaufenden Längserstreckung gebildet sein, welches entlang seiner Längserstreckung in Verschleißrichtung in den Verschleißbereich oder entlang des Verschleißbereichs des Verschleißbauteils geführt ist. Das Widerstandsmaterial wird dann zusammen mit dem Verschleißbauteil entlang seiner Längserstreckung abgetragen, wodurch sich der Widerstand des Widerstandselements ändert. An Hand des gemessenen Widerstandes des Widerstandselements wird auf die verbleibende Verschleißlänge geschlossen.

Eine einfache und kostengünstige Bestimmung der Verschleißlänge kann dadurch erreicht werden, dass der Messabschnitt des Sensors durch einen kapazitiven Messfühler oder durch einen induktiven Messfühler gebildet ist und dass sich die Kapazität des kapazitiven Messfühlers oder die Induktivität des induktiven Messfühlers durch Abrasion des Messfühlers verändert. Ebenfalls denkbar ist es, dass der Messabschnitt durch einen Lichtwellenleiter, beispielsweise durch eine oder ein Bündel von Glasfasern, gebildet ist. Durch Abrasion des Lichtwellenleiters ändert sich die optische Weglänge für einen in dem Lichtwellenleiter geführten Strahl. Dies kann beispielsweise über eine Laufzeitmessung oder interferometrisch nachgewiesen werden.

Eine einfache Positionierung des Messabschnitts innerhalb des Verschleißbereichs kann dadurch ermöglicht werden, dass der Messabschnitt des Sensors innerhalb zumindest einer Ausnehmung in dem Verschleißbereich des Verschleißbauteils angeordnet ist.

Entsprechend einer bevorzugten Ausgestaltungsvariante der Erfindung kann es vorgesehen sein, dass das zu überwachende Verschleißbauteil ein Meißel, ein Meißelhalter, ein Basisträger eines Werkzeugsystems, ein Auswerfer und/oder eine Verschleißkufe der Fräsmaschine ist. Meißel unterliegen während der Fräsarbeiten einem starken Verschleiß und müssen entsprechend häufig getauscht werden. Dabei ist ein rechtzeitiger Austausch vorteilhaft, um eine Beschädigung eines Meißelhalters oder einer Fräswalze, an denen der Meißel gehalten ist, zu vermeiden. Auf der anderen Seite soll ein Meißel erst ausgetauscht werden, wenn seine Verschleißgrenze erreicht ist, um Kosten für Ersatzmeißel sowie Stillstandzeiten der Fräsmaschine gering zu halten. Ein fortschreitender Verschleiß eines Meißelhalters oder eines Basisträgers eines Werkzeugsystems, mit dem ein Meißel an einer Fräswalze festgelegt ist, kann zu einem Verlust des Meißels führen. Dies kann durch einen rechtzeitigen Wechsel des Meißelhalters bzw. des Basisträgers vermieden werden. Auswerfer und Verschleißkufen sind im Vergleich zu den Meißeln seltener zu wechseln. Die Bestimmung der verbleibenden Verschleißlängen der aufgeführten Verschleißbauteile ermöglicht eine Synchronisation der unterschiedlich langen Wechselintervalle, so dass Stillstandzeiten der Fräsmaschine gering gehalten werden können.

Die Messung der Verschleißlänge des Verschleißbereichs erfolgt über den Sensor und seinen Messabschnitt. Der Messabschnitt wird daher gezielt in einen mechanisch stark beanspruchten Abschnitt des Verschleißbauteils positioniert. Um das für die Datenübertragung verantwortliche, berührungslos auslesbare elektronische Bauteil vor Beschädigung zu schützen ist es erfindungsgemäß vorgesehen, dass das zumindest eine berührungslos auslesbare elektronische Bauteil außerhalb des Verschleißbereiches des Verschleißbauteils in einer Ausnehmung innerhalb des Verschleißbauteils, angeordnet ist.

Die Aufgabe der Erfindung wird auch mit einer Fräsmaschine gelöst, die zumindest ein Verschleißbauteil gemäß dem Schutzanspruch 1 aufweist, wobei der Fräsmaschine zumindest ein Lesegerät zum berührungslosen Auslesen von in dem oder den berührungslos auslesbaren elektronischen Bauteilen gespeicherten Messdaten des Sensors zugeordnet ist. Die Messdaten können von dem Lesegerät für eine weitere Verwendung beispielsweise einer übergeordneten Maschinensteuerung der Fräsmaschine zugeführt werden. Vorteilhaft kann das Lesegerät zum Auslesen der Messdaten mehrerer an einem oder an mehreren Verschleißbauteilen angeordneten, berührungslos auslesbaren elektronischen Bauteilen ausgebildet sein oder es können mehrere Lesegeräte an der Fräsmaschine angeordnet sein, welche jeweils ein oder mehrere berührungslos auslesbare elektronische Bauteile auslesen. Die berührungslos auslesbaren elektronischen Bauteile können jeweils mit einem oder mit mehreren Sensoren verbunden sein. Es kann so für ein oder für mehrere Verschleißbauteile der Verschleißzustand ermittelt und Wartungsarbeiten mit einem möglichen Austausch des oder der Verschleißbauteile geplant werden. Ein zu früher wie auch ein zu später Wechsel von Verschleißbauteilen kann auf diese Weise vermieden werden, wodurch ein wirtschaftlicher Betrieb der Fräsmaschine bei anhaltend hoher Fräsqualität erreicht wird.

Eine besonders bevorzugte Erfindungsvariante ist derart, dass der Sensor oder das berührungslos auslesbare elektronische Bauteil oder das Lesegerät oder eine mit dem Lesegerät verbundene Steuereinheit dazu ausgebildet ist, als Maß für den Verschleiß des Verschleißbauteils eine entlang der zu überwachenden Verschleißrichtung gemessenen Verschleißlänge zwischen einem Bezugspunkt, insbesondere einer Verschleißgrenze des Verschleißbauteils, und einer verschleißenden Oberfläche des Verschleißbauteils zu bestimmen. Die Verschleißlänge gibt einen Abstand und damit eine verbleibende Materialstärke zwischen dem Bezugspunkt und der verschleißenden Oberfläche an. Ist der Bezugspunkt die Verschleißgrenze, deren Erreichen einen grenzwertigen Verschleiß des Verschleißbauteils markiert, so entspricht die Verschleißlänge der verbleibenden Materialstärke bis zum Erreichen dieser Verschleißgrenze. An Hand der Verschleißlänge kann beispielsweise eine mögliche Fräsleistung, welche mit dem Verschleißbauteil bis zu einem erforderlichen Austausch erreicht werden kann, abgeschätzt werden.

Eine exakte Bestimmung der Verschleißlänge kann dadurch erfolgen, dass das berührungslos auslesbare elektronische Bauteil oder das Lesegerät oder die Steuereinheit dazu ausgebildet ist, die Verschleißlänge in Abhängigkeit von den Messdaten des zumindest einen Sensors zu bestimmen.

Besonders bevorzugt kann es vorgesehen sein, dass das Lesegerät ein RFID-Lesegerät ist. Das berührungslos auslesbare elektronische Bauteil ist dann als RFID-Transponder auszubilden. RFID-Lesegeräte und RFID-Transponder sind in großer Stückzahl und für viele Einsatzbereiche optimiert im Markt verfügbar und können daher kostengünstig und ohne bzw. mit nur geringen Modifikationen für die erfindungsgemäße Verwendung vorgesehen werden.

Die das Verfahren betreffende Aufgabe der Erfindung wird dadurch gelöst, dass entlang einer zu überwachenden Verschleißrichtung eine Verschleißlänge des Verschleißbauteils als Strecke zwischen einem Bezugspunkt, insbesondere einer Verschleißgrenze des Verschleißbauteils, und einer verschleißenden Oberfläche des Verschleißbauteils oder ein mit der Verschleißlänge korrelierendes Maß ermittelt und berührungslos ausgelesen wird. Die Verschleißlänge kennzeichnet den Verschleißzustand des Verschleißbauteils. Entspricht der gewählte Bezugspunkt der Verschleißgrenze des Verschleißbauteils, so beschreibt die Verschleißlänge die verbleibende Materialstärke zwischen der Verschleißgrenze und der verschleißenden Oberfläche. Dies ermöglicht eine Prognose über die verbleibende Standzeit des Verschleißbauteils und verbessert damit deutlich die Planbarkeit von Wartungsarbeiten. Vorteilhaft können Verschleißbauteile bis zum Erreichen ihrer Verschleißgrenze verwendet werden, wobei eine Überschreitung der Verschleißgrenze sicher vermieden werden kann. Auf diese Weise wird ein kostengünstiger Betrieb der Fräsmaschine bei gleichzeitig hoher Fräsqualität erreicht. Wartungsintervalle für verschiedene Verschleißbauteile können koordiniert werden, so dass Stillstandzeiten der Fräsmaschine gering gehalten werden. Das berührungslose Auslesen ermöglicht eine einfache Übertragung der ermittelten Verschleißlängen oder des die Verschleißlängen beschreibenden Maßes an beispielsweise eine nachgeordnete Maschinensteuerung der Fräsmaschine. Dies gilt insbesondere, da es sich bei den Verschleißbauteilen zumeist um bewegte Bauteile handelt, deren kabelgebundene Kontaktierung nicht oder nur schwer zu realisieren ist.

Besonders vorteilhaft kann es vorgesehen sein, dass mit einem Sensor die Verschleißlänge oder ein mit der Verschleißlänge korrelierendes Maß bestimmt und an das zumindest eine berührungslos auslesbare elektronische Bauteil übermittelt wird. Der Sensor kann für die gewünschte Messaufgabe, nämlich die Bestimmung der Verschleißlängen, optimiert ausgebildet sein. Das berührungslos auslesbare elektronische Bauteil ist auf die Kommunikation mit einem zugeordneten Lesegerät ausgelegt. Die von dem Sensor ermittelt Messdaten werden von dem Sensor auf das berührungslos auslesbare elektronische Bauteil und von diesem an ein geeignetes Lesegerät übertragen. Vorteilhaft kann der Sensor in dem mechanisch stark beanspruchten Verschleißbereich des Verschleißbauteils angeordnet werden, während das berührungslos auslesbare elektronische Bauteil in einem vor Verschleiß geschützten Bereich positioniert werden kann. Dabei ist die Anordnung des berührungslos auslesbare elektronischen Bauteils vorzugsweise derart gewählt, dass eine störungsfreie funktechnische Verbindung über eine ausreichend große Distanz zu einem zugeordneten Lesegerät gewährleistet ist.

Gemäß einer bevorzugten Erfindungsvariante kann es vorgesehen sein, dass ein Messabschnitt des Sensors bei fortschreitendem Verschleiß des Verschleißbauteils mit abgetragen wird, wodurch sich ein Messsignal des Sensors ändert, und dass aus dem Messsignal die Verschleißlänge bestimmt wird oder dass das Messsignal das mit der Verschleißlänge korrelierende Maß bildet. Die Abmessungen des Messabschnitts ändern sich gemeinsam mit denen des Verschleißbauteils. Die damit einhergehende Änderung des Messsignals korreliert mit der Längenänderung des Messabschnitts und damit mit der Änderung der Verschleißlängen. Aus dem Messsignal kann somit unmittelbar auf die Verschleißlänge geschlossen werden.

Vorzugsweise kann es vorgesehen sein, dass der Sensor einen Widerstand von entlang der zu überwachenden Verschleißrichtung beabstandet zueinander angeordneten und parallel zueinander geschalteten elektrischen Widerständen bestimmt oder dass der Sensor einen Widerstand eines sich in Verschleißrichtung erstreckenden elektrischen Widerstandselements bestimmt und dass die Verschleißlänge in Abhängigkeit von dem bestimmten Widerstand ermittelt wird oder dass der bestimmte Widerstand das mit der Verschleißlänge korrelierende Maß bildet. Die elektrischen Widerstände bzw. das Widerstandselement sind in den Verschleißbereich des Verschleißbauteils geführt und werden mit diesem durch Abrasion abgetragen. Bei mehreren entlang der Verschleißrichtung angeordneten elektrischen Widerständen werden diese entsprechend der fortschreitenden Abrasion des Verschleißbauteils nacheinander abgetragen. Der über alle parallel geschalteten Widerstände gemessene Widerstand ändert sich bei jeder Zerstörung eines der Widerstände sprunghaft. Anhand des mit dem Sensor gemessenen Widerstandes oder der Anzahl der Änderungen des gemessenen Widerstandes kann auf die aktuelle Verschleißfläche geschlossen werden. Erstreckt sich ein vorzugsweise beidseitig kontaktiertes elektrisches Widerstandselement in Verschleißrichtung in den Verschleißbereich, so wird es kontinuierlich mit dem Verschleißbauteil durch Abrasion abgetragen. Dies bewirkt eine ebenfalls kontinuierliche Zunahme des an dem Widerstandselement gemessenen Widerstandes, aus dem dann auf die verbleibende Verschleißlänge geschlossen werden kann. Elektrische Widerstände bzw. Widerstandselemente sind als Messabschnitt des Sensors kostengünstig verfügbar. Eine elektrische Widerstandsmessung kann einfach und störungsfrei oder zumindest störungsarm durchgeführt werden.

Eine elektrische Messung eines sich mit der verbleibenden Verschleißlänge des Verschleißbauteils verändernden Wertes einer physikalischen Eigenschaft eines Messabschnitts des Sensors kann dadurch ermöglicht werden, dass der Sensor über eine Batterie oder über einen Akkumulator oder über ein zum Auslesen des berührungslos auslesbaren Bauelements verwendetes elektromagnetisches Feld mit Energie versorgt wird. Vorteilhaft verwenden der Sensor und das berührungslos auslesbare elektronische Bauteil dieselbe Energiequelle.

Ist es vorgesehen, dass die Verschleißlänge oder das mit der Verschleißlänge korrelierende Maß von dem berührungslos auslesbaren elektronischen Bauelement zwischengespeichert und von dem Lesegerät berührungslos ausgelesen wird, so können die Messdaten des Sensors jederzeit an das berührungslos auslesbare elektronische Bauteil gesendet und gespeichert werden. Das Auslesen der Messdaten durch das Lesegerät kann zeitverzögert erfolgen, beispielsweise wenn sich das berührungslos auslesbare elektronische Bauteil innerhalb eines Sende- bzw. Empfangsbereichs des Lesegerätes befindet.

Bevorzugt kann es vorgesehen sein, dass die Verschleißlänge eines Verschleißbauteils oder die Verschleißlängen mehrerer Verschleißbauteile von einer Anzeigeeinheit angezeigt werden und/oder dass in Abhängigkeit von der Verschleißlänge eines Verschleißbauteils oder den Verschleißlängen mehrerer Verschleißbauteile geeignete Maschinenparameter zum Betrieb der Fräsmaschine von der Anzeigeeinheit angezeigt oder vorgegeben werden und/oder dass in Abhängigkeit von der Verschleißlänge eines Verschleißbauteils oder den Verschleißlängen mehrerer Verschleißbauteile mit der Fräsmaschine ohne Wechsel des Verschleißbauteils oder der Verschleißbauteile durchführbare Fräsaufgaben oder die erreichbare Qualität bei der Ausführung verschiedener Fräsaufgaben ohne Wechsel des Verschleißbauteils oder der Verschleißbauteile von der Anzeigeeinheit angezeigt werden. Wird die Verschleißlänge eines oder mehrere Verschleißbauteile von der Anzeigeeinheit angezeigt, so kann ein Maschinenführer entscheiden, ob ein Wechsel eines oder mehrerer Verschleißbauteile ansteht. Vorteilhaft werden dem Maschinenführer auch Vorschläge zum geeigneten Betrieb der Fräsmaschine mit den vorliegenden Verschleißbauteilen unterbreitet. Dabei können neben den ermittelten Verschleißlängen weitere Parameter, beispielsweise ein zu bearbeitender Untergrund, eine erforderliche Fräsqualität und dergleichen berücksichtigt werden. Die ermittelten Maschinenparameter, beispielsweise ein Vorschub, eine Fräswalzendrehzahl, eine Frästiefe und dergleichen, können dem Maschinenführer angezeigt werden und von diesem eingestellt werden. Es kann jedoch auch vorgesehen sein, dass zumindest einzelne Maschinenparameter selbsttätig, also ohne Zutun eines Maschinenführers, in Abhängigkeit von den ermittelten Verschleißlängen angepasst werden. Bei stärker abgenutzten Meißeln kann es sein, dass feinere Fräsarbeiten nicht mehr oder zumindest nicht mehr der gewünschten Qualität durchgeführt werden können. Die Meißel eignen sich jedoch weiterhin für gröbere Fräsvorhaben. Vorteilhaft können die mit den vorliegenden Meißeln noch durchführbaren Fräsaufgaben bzw. die mit den vorliegenden Meißeln noch zu erreichende Qualität einem Maschinenführer angezeigt werden.

An unterschiedlichen Positionen der Fräsmaschine eingesetzte Verschleißbauteile können unterschiedlich schnell verschleißen. So kann es sein, dass beispielsweise Meißel in Abhängigkeit von ihrer Position auf einer Fräswalze unterschiedlichen Belastungen und damit einer unterschiedlichen Abrasion ausgesetzt sind. Um ein möglichst gleichmäßiges Fräsbild zu erhalten ist es vorteilhaft, wenn die auf einer Fräswalze angeordneten Meißel in etwa den gleichen Verschleißzustand aufweisen, wenn also nicht in einem Bereich der Fräswalze grenzwertig verschlissene Meißel und an einer anderen Stelle deutlich weniger abgenutzte Meißel angeordnet sind. Gleiches gilt für auch für andere Verschleißbauteile der Fräsmaschine, beispielsweise für die Meißelhalter. Um einen gleichmäßigen Verschleiß von Verschleißbauteilen zu ermöglichen kann es daher vorgesehen sein, dass in Abhängigkeit von der ermittelten Verschleißlänge von an verschiedenen Positionen an der Fräsmaschine eingesetzten, gleichen Verschleißbauteilen ein gegenseitiges Austauschen der Verschleißbauteile vorgeschlagen und/oder angezeigt wird. Zuvor an einem weniger belasteten Bereich angeordnete Verschleißbauteile können so in einem stärker belasteten Bereich versetzt werden und umgekehrt. Der Verschleißzustand der Verschleißbauteile wird auf diese Weise trotz unterschiedlicher Belastung in einem vorgegebenen Maße gleich gehalten.

Entsprechend einer besonders bevorzugten Ausgestaltungsvariante der Erfindung kann es vorgesehen sein, dass das Lesegerät an einem zur Montage und/oder zur Demontage eines Meißels verwendeten Werkzeugs angeordnet ist und dass die Verschleißlänge oder das mit der Verschleißlänge korrelierende Maß beim Wechseln eines Meißels berührungslos von dem Lesegerät ausgelesen wird. Beim Wechseln eines Meißels kann so beispielsweise der Verschleißzustand des zugeordneten Meißelhalters oder eines Basisträgers, in dem der Meißelhalter gehalten ist, überwacht werden. Dabei werden das Werkzeug und damit das Lesegerät in unmittelbare Nähe zu dem Meißelhalter bzw. dem Basisträger mit dem daran angeordneten, berührungslos auslesbaren elektronischen Bauteil gebracht. Diese unmittelbare Nähe zwischen dem Lesegerät und dem berührungslos auslesbaren elektronischen Bauteil ermöglicht den berührungslosen Datenaustausch auch im Umfeld großer metallischer Verschleißbauteile, die eine starke elektromagnetische Abschirmung bewirken.

Die Erfindung wird im Folgenden anhand eines in den Zeichnungen dargestellten Ausführungsbeispiels näher erläutert. Es zeigen:
- Fig. 1: in einer schematischen Darstellung und in Seitenansicht eine Fräsmaschine,
- Fig. 2: in einer schematischen, perspektivischen Darstellung eine Fräswalze mit daran angeordneten Meißeln,
- Fig. 3: ein Werkzeugsystem mit einem Meißel, einem Meißelhalter, einem Basisträger und jeweils einem in einen Verschleißbereich des Meißelhalters und einem Verschleißbereich des Basisträgers eingeführten, schematisch dargestellten Messabschnitt eines Sensors
- Fig. 4: in einer teilweise geschnittenen Darstellung einen Meißel mit in einem Verschleißbereich des Meißels angeordneten, schematisch dargestellten Widerständen,
- Fig. 5: einen Abschnitt des in Fig. 4 gezeigten Meißels,
- Fig. 6: eine Fräswalze mit Auswerfern,
- Fig. 7: das in Fig. 3 gezeigte Werkzeugsystem mit in einem Verschleißbereich angeordneten, schematisch dargestellten, berührungslos auslesbaren elektronischen Bauteilen.

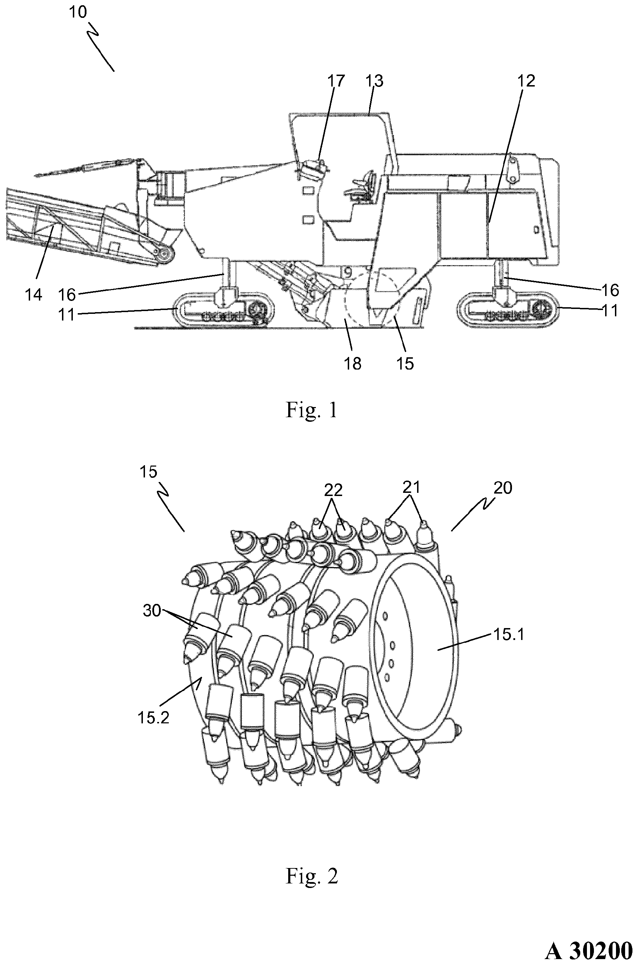

Fig. 1 zeigt in einer schematischen Darstellung und in Seitenansicht eine Fräsmaschine 10, vorliegend eine Straßenfräsmaschine. Die Erfindung kann auch an anderen Typen von Fräsmaschinen für die Bearbeitung von Untergründen, beispielsweise an Stabilisieren, Recyclern, Surface Minern und dergleichen, vorgesehen sein. Ein Maschinenrahmen 12 ist über vier Hubsäulen 16 höhenverstellbar von Fahreinheiten 11, beispielsweise Kettenlaufwerken, getragen. Die Fräsmaschine 10 kann über ein in einem Bedienstand 13 angeordnetes Bedienpult 17 bedient werden. In einem Fräswalzenkasten ist eine verdeckt angeordnete und in der Darstellung schematisch und gestrichelt gezeichnete Fräswalze 15 drehbar gelagert. Seitlich der Fräswalze 15 sind gegenüberliegend Seitenschilder 18 als Kantenschutz vorgesehen, welche in Kontakt zu der abzutragenden Fläche stehen. Sie vermeiden ein seitliches Austreten des Fräsgutes sowie unsaubere Ausbruchkanten am Rand des Fräsbereichs. An den dem Untergrund zugewandten Kanten der Seitenschilder 18 sind nicht dargestellt Verschleißelemente austauschbar befestigt. Eine Fördereinrichtung 14 dient dem Abtransport des Fräsgutes.

Fig. 2 zeigt in einer schematischen, perspektivischen Darstellung eine Fräswalze 15 mit daran angeordneten Meißeln 20. In der gezeigten Ausführungsvariante der Fräswalze 15 sind die Meißel 20 austauschbar in Meißelhaltern 30 gehalten. Die Meißelhalter 30 selbst sind in schräg zur Drehrichtung der Fräswalze 15 verlaufenden Reihen fest mit einer Walzenoberfläche 15.2 eines Fräswalzenrohrs 15.1 der Fräswalze 15 verbunden. Vorzugsweise sind die Meißelhalter 30 mit dem Fräswalzenrohr 15.1 verschweißt. Von den Meißeln 20 ragt jeweils ein Meißelkopf 22 mit einer endseitig daran angeordneten Meißelspitze 21 aus dem Meißelhalter 30 heraus. Die Meißelköpfe 22 und die daran angeordneten Meißelspitzen 21 sind schräg zur Drehrichtung der Fräswalze 15 hin geneigt ausgerichtet.

Je nach durchzuführender Fräsaufgabe werden unterschiedliche Fräswalzen 15 mit unterschiedlichen Anordnungen der Meißelhalter 30 sowie mit an die jeweilige Fräsaufgabe angepassten Typen von Meißelhaltern 30 und/oder Meißeln 20 verwendet.

Im Einsatz wird die in Fig. 1 gezeigte Fräsmaschine 10 mit einer über das Bedienpult 17 eingegebenen Vorschubgeschwindigkeit über den zu bearbeitenden Untergrund bewegt. Ein Motor treibt die Fräswalze 15 mit einer einstellbaren Drehzahl an. Dadurch tragen die auf der sich drehenden Fräswalze 15 angeordneten Meißel 20 den Untergrund, beispielsweise einen Straßenbelag, ab. Die Hubsäulen 16 ermöglichen eine Höhenverstellung des Maschinenrahmens 12 und darüber die Einstellung der Frästiefe. Alternativ oder zusätzlich kann die Fräswalze 15 relativ zum Maschinenrahmen 12 höhenverstellbar sein. Aus der Vorschubgeschwindigkeit, der Frästiefe und der tatsächlichen Fräsbreite ergibt sich letztendlich die Arbeitsleistung der Straßenfräsmaschine, also beispielsweise eine pro Zeiteinheit abgetragene Strecke oder Fläche oder Masse bzw. ein abgetragenes Volumen.

Die Meißel 20 unterliegen einem starken Verschleiß. Sie müssen daher regelmäßig ausgetauscht werden. Dabei richtet sich ihre Standzeit nach den Materialeigenschaften des bearbeiteten Untergrundes sowie nach den Maschinenparametern, mit denen die Fräsmaschine 10 und damit die Fräswalze 15 betrieben werden.

Zum Austauschen der Meißel 20 können diese, vorzugsweise mit einem geeigneten Werkzeug, von den Meißelhaltern 30 gelöst und neue Meißel 20 in die Meißelhalter 30 eingesetzt werden.

Auch die Meißelhalter 30 stehen in Kontakt mit dem abzutragenden Untergrund und verschleißen. Darüber hinaus verschleißen die Meißelhalter 30 insbesondere an der Kontaktfläche an der sich die Meißel 20 auf den Meißelhaltern 30 abstützen, so dass sie von Zeit zu Zeit ausgetauscht werden müssen. Dabei sind die Standzeiten der Meißelhalter 30 größer als die der darin gehaltenen Meißel 20. Weitere Verschleißbauteile, wie beispielsweise die an den Seitenschilden 18 angeordneten Verschleißelemente, weisen noch längere Standzeiten auf, müssen aber dennoch bei Erreichen einer Verschleißgrenze gewechselt werden.

Werden die Meißel 20 zu lange verwendet, so dass sie über ihre Verschleißgrenze hinaus abgenutzt werden, kann dies zu einem erhöhten Verschleiß der jeweiligen Meißelhalter 30 führen. Auch die Fräsqualität und die Fräsleistung verringern sich bei der Verwendung von abgenutzten Meißeln 20. Bei zu stark abgenutzten Meißelhaltern 30 besteht die Gefahr, dass Meißel 20 verloren gehen. Bei ungleichmäßig verschlissenen Meißelhaltern 30 wird die Qualität des Fräsergebnisses schlechter.

Ein zu früher Wechsel von Verschleißbauteilen führt hingegen zu erhöhten Kosten sowie zu kurzen Wartungsintervallen und damit hohen Stillstandzeiten der Fräsmaschine 10.

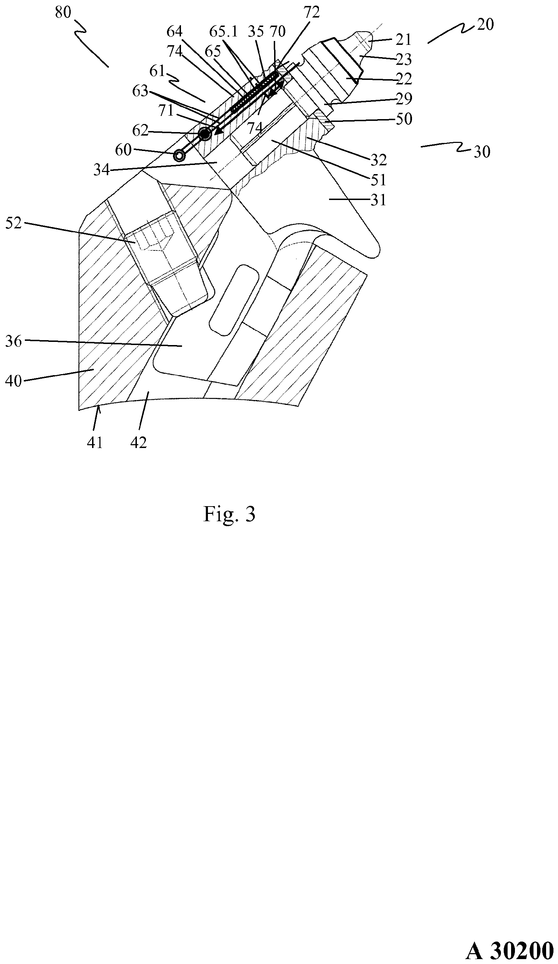

Fig. 3 zeigt ein Werkzeugsystem 80 mit einem Meißel 20, einem Meißelhalter 30, einem Basisträger 40 und einen in einen Verschleißbereich 70 des Meißelhalters 30 eingeführten, schematisch dargestellten Messabschnitt 64 eines Sensors 61.

Der Meißel 20 kann als Rundschaftmeißel mit einem Meißelkopf 22 und einem Meißelschaft 26 ausgebildet sein. Im Bereich seines Meißelschafts 26 trägt der Meißel 20 eine Spannhülse 51. Die Spannhülse 51 ist an dem Meißelschaft 26 in Umfangsrichtung des Meißelschafts 26 frei drehbar, in Achsrichtung jedoch unverlierbar gehalten. Mittels der Spannhülse 51 kann der Meißel 20 in einer Meißelaufnahme 34 des Meißelhalters 30 geklemmt gehalten werden. Wie Figur 3 zeigt, weist der Meißelkopf 22 eine Meißelspitze 21 mit einem Verbindungsteil 23 auf. Die Meißelspitze 21 besteht aus einem Hartstoffmaterial, vorzugsweise aus Hartmetall. Mittels des Verbindungsteils 23 ist die Meißelspitze 21 an dem Meißelkopf 22 befestigt, vorzugsweise mit diesem verlötet.

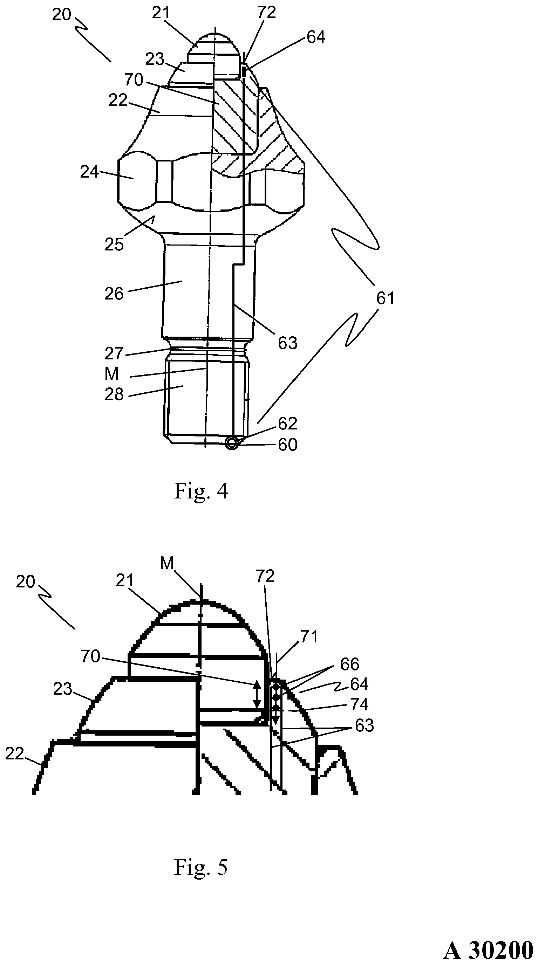

Der Meißel 20 kann, nicht dargestellt, mit einem zweiten Sensor 61 und einem zweiten RFID-Transponder 60 ausgestattet sein, wie dies zu Fig. 4 und 5 beschrieben ist.

Der Meißelhalter 30 weist einen Stützkörper 31 auf, an dem zum Meißel 20 hin weisend ein Halteabschnitt 32 angeformt ist. Der Halteabschnitt 32 kann beispielsweise zylinderförmig ausgebildet und von der Meißelaufnahme 34 durchdrungen sein. An der dem Meißelkopf 22 zugewandten Stirnseite des Halteabschnitts 32 kann eine Verschleißscheibe 50 vorgesehen sein, durch deren zentrale Bohrung der Meißelschaft 26 des Meißels 20 zu der Meißelaufnahme 34 geführt ist. Gegenüberliegend stützt sich der Meißel 20 mit dem Bund 29 an der Verschleißscheibe 50 ab. Die der Verschleißscheibe 50 zugewandte Stirnseite des Halteabschnitts 32 weist den größten Verschleiß am Meißelhalter 30 auf. Durch die Rotation und den Druck des Meißels 20, welche über die Verschleißscheibe 50 auf die vordere Fläche des Halteabschnitts 32 übertragen werden, wird der Halteabschnitt 32 ausgehend von der vorderen Fläche abgenutzt.

An den Stützkörper 31 kann von dem Meißel 20 weg weisend ein Steckansatz 36 angeformt sein. Der Steckansatz 36 ist in eine Steckaufnahme 42 eines Basisträgers 40 eingeführt und dort beispielsweise mit einer Druckschraube 52 gehalten. Der Meißelhalter 30 ist auf diese Weise lösbar an dem Basisträger 40 befestigt.

Montiert ist der Basisträger 40 mit einer unteren Anschlussseite 41 mit dem in Fig. 2 gezeigten Fräswalzenrohr 15.1 verbunden, vorzugsweise verschweißt.

Neben dem Meißel 20 stellen auch der Meißelhalter 30 und der Basisträger 40 Verschleißbauteile der Fräsmaschine 10 dar. Dabei weisen im regulären Betrieb der Fräsmaschine 10 der Meißelhalter 30 eine längere Standzeit als der Meißel 20 und der Basisträger 40 eine längere Standzeit als der Meißelhalter 30 auf.

Der Verschleiß des Meißelhalters 30 und/oder der des Basisträgers 40 können mit jeweils zumindest einem Sensor 61 erfasst werden, wie dies vorliegend für den Meißelhalter 30 gezeigt ist. Die erhaltenen Messdaten werden mit Hilfe eines berührungslos auslesbaren elektronischen Bauteils, vorliegend einem RFID-Transponder 60, an ein entsprechendes Lesegerät übertragen. Das Lesegerät kann aus einer Antenne und einer zugehörigen Elektronik ausgebildet sein. Dabei können die Antenne und die Elektronik als bauliche Einheit oder separat ausgebildet vorliegen.

Zur Überwachung des Verschleißzustandes des Meißelhalters 30 ist in dessen Halteabschnitt 32 eine Ausnehmung 35 vorgesehen. Die Ausnehmung 35 kann beispielsweise in Form einer Bohrung ausgebildet sein und entlang ihrer Längserstreckung in Richtung der Mittelachse der versetzt dazu angeordneten Meißelaufnahme 34 verlaufen. Sie ist mit ihrem einen Ende zu der dem Meißel 20 zugewandten Stirnseite des Halteabschnitts 32 hin ausgerichtet.

In der Ausnehmung 35 ist ein Widerstandselement 65 angeordnet. Das Widerstandselement 65 kann stabförmig ausgebildet und entlang seiner Längserstreckung in Richtung der Längserstreckung der Ausnehmung 35 ausgerichtet sein. Es weist ein Widerstandsmaterial auf, welches gegenüberliegend mit zwei entlang der Längserstreckung des Widerstandselements 65 verlaufenden Kontakten 65.1 kontaktiert ist. Die Kontakte 65.1 sind mittels Anschlussleitungen 63 mit einer Messschaltung 62 verbunden. Das Widerstandselement 65 und die Messschaltung 62 bilden den Sensor 61. Die Messschaltung 62 ist in einer Ausnehmung innerhalb des Meißelhalters 30 angeordnet. Durch die kabelgebundene Verbindung zwischen der Messschaltung 62 und dem Widerstandselement 65 ist es jedoch denkbar, die Messschaltung 62 an einer beliebigen anderen Position an dem Meißelhalter 30 zu positionieren. Die Messschaltung 62 ist mittels einer weiteren Kabelverbindung mit einem RFID-Transponder 60 verbunden. Der RFID-Transponder 60 stellt ein berührungslos auslesbares elektronisches Bauteil dar. Der RFID-Transponder 60 kann vorzugsweise in einem rückseitigen Zugang zu der Meißelaufnahme 34 angeordnet sein. Der rückseitige Zugang ermöglicht die Einführung eines Werkzeugs in die Meißelaufnahme 34 zur Demontage des Meißels 20. In der gewählten Position ist der RFID-Transponder 60 nicht oder nicht vollständig von Metall umschlossen. Dies ermöglicht eine Funkverbindung zu einem zugeordneten, nicht dargestellten Lesegerät. Auch der RFID-Transponder 60 kann an einer beliebigen anderen Stelle des Meißelhalters 30 angeordnet werden. Vorteilhaft ist dabei eine vor Verschleiß geschützte Position gewählt, welche nicht oder nicht vollständig von Metall umgeben und damit nicht elektromagnetisch abgeschirmt ist. Hierzu kann der RFID-Transponder beispielsweise verklebt, vergossen oder magnetisch am Meißelhalter befestigt werden

Der Meißelhalter 30 verschleißt, wie zuvor beschrieben, vorwiegend von seiner dem Meißel 20 und der Verschleißscheibe 50 zugewandten Stirnseite seines Halteabschnitts 32 aus. Der zu überwachende Verschleißbereich 70 liegt daher im vorderen Bereich des Halteabschnitts 32 und ist durch einen Doppelpfeil gekennzeichnet. Eine Verschleißrichtung 71, entlang welcher der Verschleißbereich 70 überwacht wird, verläuft, ausgehend von der der Verschleißscheibe 50 zugewandten Stirnseite des Halteabschnitts 32, entsprechend der Mittelachse der Meißelaufnahme 34. Sie ist durch einen Pfeil gekennzeichnet. Die Stirnseite des Halteabschnitts 32 bildet eine verschleißende Oberfläche 72. Eine quer zur Mittelachse der Meißelaufnahme 34 verlaufende Verschleißgrenze 74 bildet den Abschluss des zu überwachenden Verschleißbereichs 70.

Während eines Fräsvorgangs wird der Halteabschnitt 32, ausgehende von seiner dem Meißel 20 zugewandten Seite, abgenutzt. Damit verschiebt sich die Position der verschleißenden Oberfläche 72 in Richtung der Verschleißgrenze 74. Bei fortschreitendem Verschleiß wird auch das Widerstandselement 65, ausgehend von seiner dem Meißel 20 zugewandten Seite, abgetragen. Dadurch steigt der zwischen den beiden Kontakten 65.1 gemessene elektrische Widerstand des Widerstandselements 65 an. Der elektrische Widerstand des Widerstandselements 65 verändert sich in Abhängigkeit von der verbleibenden Verschleißlänge als Maß zwischen der Verschleißgrenze 74 als Bezugspunkt und der verschleißenden Oberfläche 72. Die Widerstandsänderung erfolgt kontinuierlich mit fortschreitendem Verschleiß. Der elektrische Widerstand wird mit der Messschaltung 62 des Sensors 61 gemessen. Die so erhaltenen Messdaten werden an das berührungslos auslesbare elektronische Bauteil (RFID-Transponder 60) übertragen und dort zwischengespeichert. Sie können aus diesem von einem außerhalb des Werkzeugsystems 80 an der Fräsmaschine 10 angeordneten, nicht dargestellten Lesegerät ausgelesen werden. Alternativ kann auch die Messung des elektrischen Widerstands beim Auslesen des RFID- Transponder erfolgen.

Besonders bevorzugt kann es vorgesehen sein, dass das Lesegerät an einem nicht dargestellten Werkzeug zur Montage und/oder Demontage des Meißels 20 angeordnet ist. So kann das Lesegerät beispielsweise an einem Austreibdorn des Werkzeugs, welcher während der Demontage des Meißels durch den rückseitigen Zugang zu dem in der Meißelaufnahme 34 gehaltenen Meißelschaft 26 des Meißels 20 geführt ist, angeordnet sein. Bei einem Wechsel des Meißels 20 kann mit Hilfe des Lesegerätes das an dem Meißelhalter 30 angeordnete, berührungslos auslesbare elektronische Bauteil (RFID-Transponder 60) ausgelesen werden. Die Messdaten des Sensors 61 werden dabei auf das an dem Werkzeug angeordnete Lesegerät übertragen. Die verbleibende Verschleißlänge des Meißelhalters 30 bzw. ein mit der Verschleißlänge korrelierendes Maß können auf diese Weise während des Meißelwechsels erfasst und bewertet werden. Bei jedem Meißelwechsel erfolgt somit eine Bestimmung des Verschleißzustandes des zugeordneten Meißelhalters 30. Daraufhin kann entschieden werden, ob der Meißelhalter 30 weiter verwendet oder ausgetauscht wird. Es ist denkbar, die verbleibende Verschleißlänge unmittelbar durch das Werkzeug anzuzeigen, beispielsweise über eine daran angeordnete Anzeige oder ein optisches oder akustisches Signal. Es ist auch denkbar, die Daten des Lesegerätes auf eine weitere Auswerteeinheit zu übertragen, beispielsweise einen Computer oder eine Maschinensteuerung der Fräsmaschine, zu übertragen und dort auszuwerten und/oder anzuzeigen.

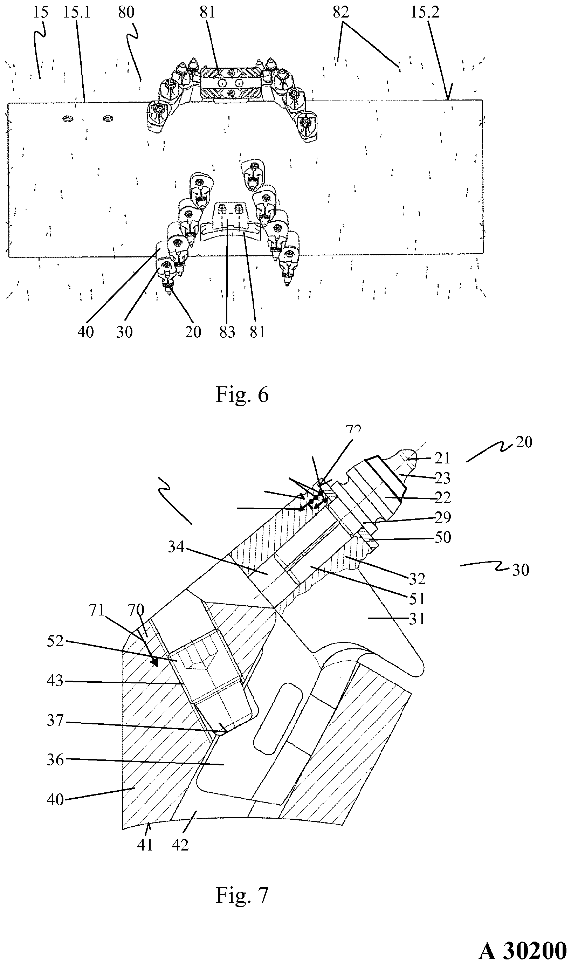

Zur Bewertung des Verschleißzustandes des Basisträgers 40 kann ebenfalls ein für den Basisträger 40 nicht dargestellter Sensor 61 mit einem Widerstandselement 65 und einer Messschaltung 62 vorgesehen sein, wie diese für den Meißelhalter 30 beschrieben sind. Das Widerstandselement 65 bildet auch hier den Messabschnitt 64 des Sensors 61. Es kann entlang einer beispielhaft durch einen Pfeil gekennzeichneten Verschleißrichtung 71 in einem zu überwachenden Verschleißbereich 70 des Basisträgers 40 angeordnet sein (dargestellt in Figur 7).

Auch ist es denkbar, an den in Fig. 1 dargestellten Seitenschilden Sensoren 61 anzuordnen, deren Messabschnitte 64 entlang einer vorgegebenen Verschleißrichtung 71 in zu überwachende Verschleißbereiche 70 der an den Seitenschilden 18 lösbar angeordneten Verschleißbauteile geführt sind. Die Messdaten der Sensoren 61 können an berührungslos auslesbare Bauteile, beispielsweise RFID-Transponder 60, übertragen und ausgelesen werden. Auf diese Weise kann der Verschleißzustand der Seitenschilde 18 überwacht werden.

Fig. 4 zeigt in einer teilweise geschnittenen Darstellung einen Meißel 20 mit in einem Verschleißbereich des Meißels 20 angeordneten, schematisch dargestellten Widerständen 66 (in Figur 5 dargestellt). Den vorderen Abschluss des Meißels 20 bildet die Meißelspitze 21. Sie ist vorzugsweise aus einem Hartwerkstoff, in dem gezeigten Ausführungsbeispiel aus einem polykristalinen Diamanten (PKD), gebildet. Die Meißelspitze 21 ist in einer Ausnehmung des Verbindungsteils 23 gehalten, dass wiederum in einer in den Meißelkopf 22 eingeformten Ausnehmung festgelegt ist. Das Verbindungsteil 23 ist aus einem Hartwerkstoff, vorliegend aus Hartmetall, gebildet. Der Meißelkopf 22 besteht aus einem Stahl. Die Meißelspitze 21, dass Verbindungsteil 23 und der Meißelkopf 22 bilden eine gegenüber einer Mittellängsachse M des Meißels 20 schräg ausgerichtete und zur Meißelspitze 21 hin spitz zulaufende Oberfläche aus, an der das mit dem Meißel 20 abgetragene Fräsgut entlanggleitet. An seinem äußeren Umfang bildet der Meißelkopf 22 eine Werkzeugaufnahme 24 aus, die über eine leicht gewölbt ausgebildete Stützfläche 25 in einen Meißelschaft 26 des Meißels 20 übergeht. Der Meißelschaft 26 ist zylinderförmig ausgebildet. Er weist endseitig ein Gewinde 28 auf, welches durch einen Einstich 27 von dem nicht mit einem Gewinde versehenen Bereich des Meißelschaftes 26 abgetrennt ist. Der Meißel 20 kann mit seinem Meißelschaft 26 in eine entsprechende Aufnahme eines Meißelhalters 30, wie er beispielhaft in Fig. 2 gezeigt ist, eingesetzt und durch eine Schraubverbindung zu seinem Gewinde 28 darin gehalten werden. Er liegt dann mit seiner Stützfläche 25 an einer entsprechend geformten Gegenfläche des Meißelhalters 30 an. Zum Öffnen und Schließen der Schraubverbindung kann ein Werkzeug an der Werkzeugaufnahme 24 angesetzt werden.

Im Rahmen der Erfindung können nicht nur die in Fig. 3 und 4 gezeigten Meißel 20 Verwendung finden. Vielmehr ist die Erfindung auch für alle anderen Arten von Meißel mit einem Halte- und einem Arbeitsabschnitt anwendbar.

Im Betrieb wird der Meißel 20 mit seiner Meißelspitze 21 voraneilend durch einen abzutragenden Untergrund geführt. Dabei sind insbesondere die Meißelspitze 21, dass Verbindungsteil 23 und der Meißelkopf 22 einer starken mechanischen Belastung ausgesetzt. Die aus polykristallinem Diamant gefertigte Meißelspitze 21 weist auf Grund ihrer sehr großen Härte nur eine vergleichsweise geringe Abrasion auf. Die äußeren Oberflächen des Verbindungsteils 23 und des Meißelkopfes 22 werden hingegen stärker abgetragen. Verschleißt beispielsweise das Verbindungsteil 23 so stark, dass die Ausnehmung, in welcher die Meißelspitze 21 gehalten ist, freigelegt wird, so kann die Meißelspitze 21 verlorengehen. Der Meißel 20 ist dann verschlissen und kann nicht weiter verwendet werden.

In seinen in Arbeitsrichtung vorderen Bereich des Verbindungsteils 23 ist ein Messabschnitt 64 eines Sensors 61 angeordnet. Der Messabschnitt 64 ist über Zuleitungen mit der Messschaltung 62 des Sensors 61 elektrisch verbunden. Die Messschaltung 62 ist in einen RFID-Transponder 60 als berührungslos auslesbarem, elektronischen Bauteil integriert. Dieser ist am dem Meißelkopf 22 abgewandten Ende des Meißelschaftes 26 angeordnet.

Fig. 5 zeigt einen Abschnitt des in Fig. 4 gezeigten Meißels 20 im Bereich der Meißelspitze 21. Die Abnutzung des Meißels 20 erfolgt ausgehend von seiner äußeren Oberfläche. So wird im Fräsbetrieb auch die umlaufend zu der Meißelspitze 21 angeordnete Oberfläche des Verbindungselements 23 abgetragen. Sie stellt damit eine verschleißende Oberfläche 72 des Meißels 20 dar, wie eine solche bereits zu Fig. 3 für den dort dargestellten Meißelhalter 30 beschrieben ist. Durch Abrasion nähert sich die verschleißende Oberfläche 72 der durch eine gestrichelte Linie gekennzeichneten Verschleißgrenze 74 des Meißels 20. Ist das Verbindungselement 23 soweit abgenutzt, dass die verschleißende Oberfläche 72 die Verschleißgrenze 74 erreicht, so besteht eine hohe Gefahr, dass die Meißelspitze 21 verlorengeht und der Meißel 20 unbrauchbar wird. Der Meißel 20 sollte jetzt ausgetauscht werden. Die verbleibende Materialstärke zwischen der Verschleißgrenze 74 und der verschleißenden Oberfläche 72 bildet als Verschleißlänge ein Maß für den Verschleißzustand des Meißels 20.

Erfindungsgemäß sind entlang einer durch einen Pfeil gekennzeichneten Verschleißrichtung 71 elektrische Widerstände 66 innerhalb des Verbindungsteils 23 angeordnet. Die Widerstände 66 verteilen sich über den entlang der durch einen Pfeil gekennzeichneten Verschleißrichtung 71 zu überwachenden Verschleißbereich 70, der sich von der verschleißenden Oberfläche 72 bis zu der Verschleißgrenze 74 erstreckt. Sie sind parallel zueinander geschaltet und über Anschlussleitungen 63 mit der in dem RFID-Transponder 60 integrierten Messschaltung 62 verbunden, wie dieser in Fig. 4 gezeigt ist. Die Messschaltung 62 ermöglicht die Bestimmung des Gesamtwiderstandes der parallel geschalteten elektrischen Widerstände 66. Die Widerstände 66 und die Messschaltung 62 bilden zusammen einen Sensor 61 aus. Dabei bilden die parallelgeschalteten Widerstände 66 den Meßabschnitt 64 des Sensors 61. Der RFID-Transponder 60 stellt ein berührungslos auslesbares elektronisches Bauteil dar. Er ist zum Austausch von Messdaten intern mit der Messschaltung 62 des Sensors 61 elektrisch verbunden.

Durch den Verschleiß des Meißels 20 entlang der überwachten Verschleißrichtung 71 werden auch die innerhalb des Verschleißbereiches 70 angeordneten Widerstände 66 in der Reihenfolge ihrer Anordnung entlang der Verschleißrichtung 71 abgetragen. Dies führt zu einer Änderung des von der Messschaltung 62 des Sensors 61 bestimmten Widerstandes der parallel geschalteten Widerstände 66. Der Abtrag der Widerstände 66 wird von der Messschaltung 62 anhand des gemessenen Widerstandes festgestellt. Die Position der Widerstände 66 innerhalb des Verschleißbereichs 70 und entlang der Verschleißrichtung 71 ist bekannt. Es kann daher an Hand des gemessenen Widerstandes auf eine Verschleißlänge als Maß zwischen der Verschleißgrenze 74 als Bezugspunkt und der aktuellen Lage der verschleißenden Oberfläche 72 geschlossen werden.

Die Widerstände 66 sind in dem gezeigten Ausführungsbeispiel äquidistant zueinander angeordnet. Eine nachgewiesene Änderung des gemessenen Widerstandes kennzeichnet daher eine Abnahme der Verschleißlänge 70 um den Abstand zwischen zwei Widerständen. Die Verschleißlänge 70 wird diskontinuierlich bestimmt, wobei die Auflösung bei der Ermittlung der Verschleißlängen 70 durch den Abstand zwischen zwei Widerständen 66 vorgegeben ist. In dem gezeigten Ausführungsbeispiel sind drei aufeinanderfolgende Widerstände 66 vorgesehen. Es können jedoch auch nur zwei Widerstände 66 oder mehr als drei Widerstände 66 entlang der Verschleißrichtung 71 angeordnet sein. Damit kann die Auflösung bei der Bestimmung der verbleibenden Verschleißlänge an die jeweiligen Anforderungen angepasst werden.

Die Verschleißlänge 70 kann direkt aus dem gemessenen Widerstand abgeleitet werden. Dazu ist eine entsprechend kalibrierte Messschaltung 62 erforderlich, welche eine ausreichend genaue Messung des Widerstandes ermöglicht. Jedem Messwert ist eine Anzahl verbliebener Widerstände 66 zugeordnet. Da die Widerstände 66 entlang der Verschleißrichtung 71 und damit in einer vorgegebenen Reihenfolge abgetragen werden, ist bei Kenntnis der Anzahl verbliebener Widerstände 66 und der Position der einzelnen Widerstände 66 die Bestimmung der Verschleißlänge als Maß zwischen dem gewählten Bezugspunkt, vorliegend der Verschleißgrenze 74, und dem Äußersten noch nicht abgetragenen Widerstand 66 möglich.

Es ist auch denkbar, zur Bestimmung der Verschleißlängen die Anzahl von aufgetretenen Widerstandsänderungen zu bestimmen und auszuwerten. Bei jedem abgetragenen Widerstand 66 steigt der gemessene Widerstand an. Aus der Anzahl der nachgewiesenen Widerstandsänderung kann somit auf die Anzahl der abgetragenen Widerstände 66 und damit auf die Anzahl der verbleibenden Widerstände 66 geschlossen werden. Da die Widerstände 66 in ihrer Reihenfolge entlang der Verschleißrichtung 71 abgetragen werden, kann bei bekannter Anzahl und Position der abgetragenen bzw. verbleibenden Widerstände 66 auf die verbleibende Verschleißlängen geschlossen werden.

Die vorstehenden, auf einen Meißel 20 bezogenen Ausführungen, welche auf die Verwendung und die Anordnung der Widerstände 66 bezogen sind, sollen im Rahmen der Offenbarung dieser Patentanmeldung auch in Verbindung mit den oben beschriebenen Meißelhaltern 30 gelten.

Es ist weiterhin denkbar, die Widerstände 66 entlang der Verschleißrichtung 71 in unterschiedlichen Abständen zueinander anzuordnen. Damit ist es beispielsweise möglich, bei großen Verschleißlängen größere Abstände und zu kleinen Verschleißlängen hin kleinere Abstände zwischen den Widerständen 66 vorzusehen. Die Genauigkeit bei der Bestimmung der Verschleißlängen nimmt bei einer solchen Anordnung vor Erreichen der Verschleißgrenze 74 und damit vor einem unmittelbar bevorstehenden, erforderlichen Wechsel des Meißels 20 zu, während bei einem vergleichsweise unkritischen Verschleißzustand des Meißels 20 bei großer Verschleißlänge eine geringere Genauigkeit bei der Bestimmung der Verschleißlängen zugelassen wird. Vorteilhaft wird dadurch der im Neuzustand äußere Bereich des Meißels 20 bzw Meißelhalters 30 aufgrund der dort weniger vorgesehenen Widerstände 66 weniger geschwächt, wodurch die Lebenserwartung des Meißels 20/Meißelhalters 30 erhöht wird.

Die Verschleißrichtung 71 muss nicht in Richtung der Mittellängsachse M des Meißels 20 oder der Längsachse der Meißelaufnahme des Meißelhalters 30 verlaufen. Prinzipiell ist jede geeignete Richtung denkbar. Insbesondere ist es auch denkbar, die Verschleißrichtung 71 schräg zur Mittellängsachse M des Meißels 20 bzw. der Längsachse der Meißelaufnahme des Meißelhalters 30, orthogonal zur Mittellängsachse M/Längsachse oder auf einer gebogenen Bahn vorzugeben. Die Widerstände 66 sind dann entlang der schrägen oder gebogenen Ausrichtung der Verschleißrichtung 71 angeordnet. Die Verschleißlänge ist bei einer solchen Anordnung der Widerstände 66 entlang der schräg oder gebogen verlaufenden Verschleißrichtung 71 zwischen dem Bezugspunkt, insbesondere der Verschleißgrenze 74, und der verschleißenden Oberfläche 72 gemessen.

Die Messschaltung 62 des Sensors 61 ist in den gezeigten Ausführungsbeispielen in dem RFID-Transponder 60 integriert. Die Verbindung zwischen der Messschaltung 62 und den Widerständen 66 des Messabschnitts 64 erfolgt über die Anschlussleitungen 63. Die Anschlussleitungen 63 sind durch Bohrungen durch den Meißelschaft 26 und den Meißelkopf 22 oder durch den Meißelhalter 30 zu den Widerständen 66 geführt. Es ist auch denkbar, die Anschlussleitungen 63 in vor Verschleiß geschützten Bereichen, beispielsweise an der Meißeloberfläche bzw an einer entprechenden Oberfläche des Meißelhalters 30, aufzukleben. Die Widerstände 66 könnrn innerhalb einer oder mehrerer Ausnehmungen in dem Verbindungsteil 23 oder dem Meißelhalter 30 positioniert sein. Der RFID-Transponder 60 ist an dem dem Meißelkopf 22 gegenüberliegenden Ende des Meißelschaftes 26 angeordnet. Er befindet sich damit in einem vor Verschleiß geschützten Bereich. Der RFID-Transponder 60 ist an der Oberfläche des Meißelschaftes 26 (bzw. an einer Oberfläche des Meißelhalters 30) positioniert. Er kann somit störungsarm und über größere Distanzen von einem geeigneten Lesegerät ausgelesen werden.

In den gezeigten Ausführungsbeispielen ist ein passiver RFID-Transponder 60 verwendet. Dieser wird zum Auslesen über das dazu von dem Lesegerät ausgesendete, elektromagnetische Feld mit Energie versorgt. Vorteilhaft wird diese Energie auch zur Durchführung der Widerstandsmessung verwendet. Der RFID-Transponder 60 und der Sensor 61 benötigen in diesem Fall keine eigene Energiequelle. Sie können daher lange gelagert bzw. verwendet werden, ohne dass sich eine erforderliche Energiequelle entlädt.

Es ist auch denkbar, einen aktiven RFID-Transponder 60 zu verwenden. Dieser verfügt über eine eigene Batterie und einen Speicher zur Speicherung von Daten. Vorteilhaft wird die Messschaltung 62 des Sensors 61 ebenfalls über die Batterie des RFID-Transponders 60 mit Energie versorgt. Die Messung des Widerstandes der parallel geschalteten Widerstände 66 kann somit zu einem beliebigen Zeitpunkt erfolgen. Bevorzugt erfolgt die Messung in vorgegebenen zeitlichen Intervallen, um den Energieverbrauch des Sensors 61 gering zu halten.

Das von dem Sensor 61 ermittelte und von dem Widerstandswert der parallel geschalteten Widerstände 66 abhängige Messsignal wird digitalisiert und in dem Speicher des RFID-Transponders 60 als Messdaten zwischengespeichert. Von dort kann es mit einem geeigneten Lesegerät ausgelesen werden. Es kann ein Stromsignal als ein mit dem Widerstandswert der verbliebenen, parallel geschalteten Widerstände 66 und damit der Verschleißlänge korrelierendes Maß als Messdaten abgelegt werden. Auch kann es vorgesehen sein, aus dem Messsignal einen Widerstandswert zu bilden und diesen als Messdaten von dem Sensor 61 zu dem RFID-Transponder 60 zu übertragen und in dessen Speicher digitalisiert abzulegen. Ebenfalls möglich ist es, die Verschleißlänge aus dem Messsignal des Sensors 61 zu ermitteln und als Messdaten zu speichern.

Anhand der ermittelten Verschleißlängen kann ein Maschinenführer entscheiden, ob der Meißel 20 und/oder Meißelhalter 30 für eine anstehende Fräsaufgabe eine ausreichend lange Reststandzeit aufweist und ob mit dem Meißel 20 und/oder Meißelhalter 30 eine geforderte Fräsqualität zu erreichen ist. Es ist auch denkbar, unter Berücksichtigung weiterer Betriebsdaten, beispielsweise von Materialeigenschaften eines zu bearbeitenden Untergrundes, unter Berücksichtigung der ermittelten Verschleißlängen automatisiert eine Prognose für eine erwartete Reststandzeit des Meißels 20 und/oder des Meißelhalters 30 zu erstellen und dem Maschinenführer anzuzeigen. Dieser kann dann entscheiden, ob der Meißel 20 und/oder Meißelhalter 30 getauscht oder weiterverwendet werden soll. Auch kann der Maschinenführer anhand der ermittelten Verschleißlängen verschiedene Verschleißbauteile, beispielsweise verschiedener Meißel 20 und/oder verschiedener Meißelhalter, einen geeigneten Zeitpunkt für eine Wartung festlegen, in der dann mehrere Verschleißbauteile gleichzeitig gewechselt werden. Wartungsarbeiten an verschiedenen Verschleißbauteilen können so koordiniert und damit Stillstandzeiten der Fräsmaschine 10 gering gehalten werden. Verschleißbauteile können bis zum Erreichen ihrer Verschleißgrenze verwendet und damit der Ersatzteilbedarf gering gehalten werden. Die Ermittlung der Verschleißlänge ermöglicht gegenüber einer reinen Überwachung des Erreichens der Verschleißgrenze 74 eine vorausschauende Planung von Wartungsarbeiten. Unerwartete Stillstandzeiten können auf diese Weise vermieden und gleichzeitig die Fräsqualität hoch gehalten werden.

Fig. 6 zeigt eine Fräswalze 15 mit einem Auswerfer 81. Auf der Walzenoberfläche 15.2 sind eine Vielzahl von Basisträgern 40 von Werkzeugsystemen 80 aufgeschweißt. Die Basisträger 40 tragen auswechselbare Meißelhalter 30, von denen jeweils ein Meißel 20 gehalten ist. Die Basisträger 40 sind einander so zugeordnet, dass sei eine Wendel, nämlich eine Transportwendel 82, bilden. Zur besseren Übersichtlichkeit sind nur die inneren Werkzeugsysteme 80 gezeigt, während der weitere Verlauf der Transportwendel 82 durch Striche gekennzeichnet ist. Die Striche kennzeichnen dabei die Mittellängsachse M der nicht dargestellten Meißel 20. Die Transportwendel 82 dreht sich, ausgehend von der Seite der Fräswalze 15, auf der Walzenoberfläche 15.2 in Richtung auf die zwischen den beiden Seiten gebildete Fräsrohrmitte.

Die Transportwendeln 82 treffen sich paarweise im Bereich der Fräswalzenmitte. Wie in Fig. 6 zu erkennen ist, ist dort jeweils mindestens eine Auswerfereinheit mit einem Tragteil 83 und einem daran befestigten Auswerfer 81 angeordnet. Der Auswerfer 81 dient dem Auswurf des von den Meißeln 20 abgetragenen Fräsgutes auf ein nicht gezeigtes Transportband. Dazu wird das Fräsgut von der Transportwendel 82 zu der Auswerfereinheit mit dem Auswerfer 81 transportiert.

Während des Werkzeugeinsatzes verschleißt vornehmlich der radial außenstehende Bereich des Auswerfers 81. Ist seine hier nicht gezeigte Verschleißgrenze 74 erreicht, muss der Auswerfer 81 ausgetauscht werden. Auch an dem Auswerfer 81 kann ein Sensor 61 mit einem zugeordneten, berührungslos auslesbaren elektronischen Bauteil (RFID-Transponder 60) angeordnet werden, wie dies im übertragenen Sinne für die in den Fig. 3 bis 6 gezeigten Verschleißbauteilen beschrieben ist. Dieser ermöglicht die Bestimmung der verbleibenden Verschleißlänge, aus der dann eine verbleibende Standzeit des Auswerfers 81 abgeleitet werden kann.

Die zu den Fig. 3 bis 5 beschriebenen Sensoren 61 ermöglichen die Bestimmung der Verschleißlänge 74 an Verschleißbauteilen einer Fräsmaschine 10 als Maß zwischen einer verschleißenden Oberfläche 72 und einem Bezugspunkt, insbesondere einer Verschleißgrenze. Die Bestimmung der Verschleißlänge 74 hat gegenüber einer einfachen Bestimmung des Erreichens einer Verschleißgrenze 74 den Vorteil, dass der Verlauf einer Abnutzung eines Verschleißbauteils bestimmt wird. Dies ermöglicht Prognosen beispielsweise über einen erwarteten weiteren Verlauf der Abnutzung, über eine vorzusehende Wartung oder über eine erreichbare Fräsqualität, welche bei dem ermittelten Abnutzungszustand mit dem Verschleißbauteil zu erreichen ist. Auch können Maschinenparameter der Fräsmaschine 10, wie beispielsweise eine Vorschubgeschwindigkeit, eine Drehzahl der Fräswalze 15 oder eine Frästiefe, in Abhängigkeit von der oder den ermittelten Verschleißlängen eingestellt oder begrenzt werden, um bei hoher Fräsleistung und geringem Energieverbrauch eine gute Fräsqualität zu erreichen. Wartungsarbeiten der verschiedenen Verschleißbauteile können aufeinander abgestimmt werden. Dadurch lassen sich zusätzliche Stillstandzeiten der Fräsmaschine 10, wie sie bei einem unerwarteten erforderlichen Wechsel eines Verschleißbauteils auftreten können, vermeiden. Der rechtzeitige Austausch der Verschleißbauteile führt zu einer hohen erreichbaren Fräsqualität bei gleichzeitig hoher Fräsleistung und geringen Betriebskosten.

Die beschriebenen Sensoren 61 mit den beschriebenen Messabschnitten 64 können für die verschiedenen Verschleißteile der Fräsmaschine 10 eingesetzt werden. So ist es möglich, in dem Verschleißbereich 70 des Meißelhalters 30 entlang der Verschleißrichtung 71 angeordnete, parallel geschaltete Widerstände 66 vorzusehen. Entsprechend können kontinuierlich messende Widerstandselemente 65 bei Meißeln vorgesehen werden. Auch ist es denkbar, andere Sensoren 61 mit anderen Messabschnitten 64, welche eine Bestimmung der Verschleißlänge ermöglichen, zu verwenden und deren Messdaten mittels eines berührungslos auslesbaren elektronischen Bauteils zu übertragen. So können induktive, kapazitive oder optische Sensoren 61 verwendet werden. Bei optischen Sensoren 61 kann beispielsweise ein oder mehrere Lichtwellenleiter, insbesondere eine Glasfaser oder ein Bündel von Glasfasern, entlang der Verschleißrichtung 71 in den Verschleißbereich 70 geführt werden. Dieser wird dann, zusammen mit dem zu überwachenden Verschleißbauteil, abgetragen. Damit verkürzt sich ein optischer Weg innerhalb des Lichtwellenleiters, was messtechnisch, beispielsweise durch eine Laufzeitmessung oder interferometrisch, bestimmt werden kann.

Die Anwendung der Erfindung ist nicht auf die gezeigten Verschleißbauteile und zu überwachenden Verschleißbereiche 70 beschränkt. Sie kann vielmehr an beliebigen Verschleißbauteilen der Fräsmaschine vorgesehen werden. So können unterschiedliche Meißel-, Meißelhalter- und Basisträgertypen mittels Sensoren 61 in ihrem Verschleißverhalten überwacht werden. Auch können an einem Verschleißbauteil mehrere Verschleißbereiche 70 überwacht werden.

Fig. 7 zeigt das in Fig. 3 gezeigte Werkzeugsystem 80 mit in einem Verschleißbereich 70 angeordneten, schematisch dargestellten, berührungslos auslesbaren elektronischen Bauteilen. Der Aufbau des Werkzeugsystems 80 entspricht dem aus Fig. 3, auf dessen Beschreibung Bezug genommen wird. Entlang der Verschleißrichtung 71 sind berührungslos auslesbare elektronische Bauteile in Form von RFID-Transponder 60 angeordnet. Die RFID-Transponder 60 weisen jeweils eine eindeutige Kennung auf, die von einem nicht dargestellten, an der Fräsmaschine 10 oder einem Werkzeug zur Montage bzw. Demontage des Meißels 20 angeordneten Lesegerät ausgelesen werden können. Im Einsatz nutzt sich insbesondere der Halteabschnitt 32 des Meißelhalters 30, ausgehend von seiner Oberfläche, ab. Dabei verschiebt sich die entlang der Verschleißrichtung 71 angeordnete, verschleißende Oberfläche 72 entlang der Verschleißrichtung 71 hin zu der Verschleißgrenze 74. Während der Abnutzung des Halteabschnitts 32 werden die RFID-Transponder 60 in der Reihenfolge ihrer Anordnung entlang der Verschleißrichtung 71 freigelegt und abgetragen. Die Kennung eines derart zerstörten RFID-Transponders 60 kann nicht mehr von dem Lesegerät erfasst werden. An Hand der Position des äußersten der verschleißenden Oberfläche 72 zugewandten RFID-Transponders 60, dessen Kennung noch nachweisbar ist, kann auf die verbleibende Verschleißlänge als Distanz zwischen der verschleißenden Oberfläche 72 und einem Bezugspunkt, der vorzugsweise die Verschleißgrenze 74 des Meißelhalters 30 bildet, geschlossen werden. Es erfolgt somit eine diskontinuierliche Bestimmung der Verschleißlänge des Halteabschnitts 32. Diese kann, wie zuvor beschrieben, für die Planung von Wartungsarbeiten verwendet werden.

Hierbei ist vorgesehen, dass zwei oder mehrere berührungslos auslesbare elektronische Bauteile entlang der zumindest einen zu überwachenden Verschleißrichtung 71 aufeinanderfolgend und beabstandet zueinander in dem Verschleißbereich 70 oder entlang von dem Verschleißbereich 70 angeordnet sind. Dabei ist dem oder den berührungslos auslesbaren elektronischen Bauteilen jeweils eine eindeutige und berührungslos auslesbare Kennung zugeordnet. Vorzugsweise kann es vorgesehen sein, dass den in der zumindest einen zu überwachenden Verschleißrichtung 71 aufeinanderfolgend und beabstandet zueinander in dem Verschleißbereich 70 oder entlang von dem Verschleißbereich 70 angeordneten, berührungslos auslesbaren elektronischen Bauteilen jeweils eine über die Kennung eindeutig bestimmbare Position zugeordnet ist und dass ein Lesegerät oder eine Steuereinheit dazu ausgebildet sind, die Verschleißlänge, ausgehend von dem Bezugspunkt, bis zur Position von einem in Richtung des fortschreitenden Verschleißes letzten Bauelement, dessen Kennung nicht mehr auslesbar ist, oder bis zur Position von einem in Richtung des fortschreitenden Verschleißes ersten Bauelement, dessen Kennung auslesbar ist, oder bis zu einem zwischen dem in Richtung des fortschreitenden Verschleißes letzten Bauelement, dessen Kennung nicht mehr auslesbar ist, und dem in Richtung des fortschreitenden Verschleißes ersten Bauelement, dessen Kennung auslesbar ist, eingegrenzten Bereich zu bestimmen. Vorteilhaft werden bei der zu Fig. 7 beschrieben Bestimmung der Verschleißlänge als Maß für den Verschleißzustand des jeweiligen Verschleißbauteils keine zusätzlichen Sensoren 61 benötigt.

## Patentansprüche

1. Verschleißbauteil für eine Fräsmaschine (10), insbesondere für eine Straßenfräsmaschine, einen Stabilisierers, einen Recycler, einen Surface Miner oder dergleichen, wobei dem Verschleißbauteil zumindest ein berührungslos auslesbares elektronisches Bauteil zur Verschleißbestimmung des Verschleißbauteils zugeordnet ist,
wobei zumindest ein Sensor (61) mit dem zumindest einem berührungslos auslesbaren elektronischen Bauteil zur Übertragung von Daten verbunden ist, wobei das berührungslos auslesbare elektronische Bauteil dazu ausgebildet ist, Messdaten des Sensors (61) zu empfangen und für ein berührungsloses Auslesen bereitzustellen , wobei zumindest ein Messabschnitt (64) des Sensors (61) entlang zumindest einer zu überwachenden Verschleißrichtung (71) in einen Verschleißbereich (70) des Verschleißbauteils geführt ist, **dadurch gekennzeichnet,**
**dass** das zumindest eine berührungslos auslesbare elektronische Bauteil außerhalb des Verschleißbereiches des Verschleißbauteils, in einer Ausnehmung innerhalb des Verschleißbauteils, angeordnet ist,
und **dass** der Messabschnitt (64) des Sensors (61) innerhalb zumindest einer Ausnehmung (35) in dem Verschleißbereich (70) des Verschleißbauteils angeordnet ist.

2. Verschleißbauteil nach Anspruch 1, **dadurch gekennzeichnet, dass** eine Abrasion des Messabschnitts (64) zu einer kontinuierlichen oder zu einer diskontinuierlichen Veränderung eines Messsignals des Sensors (61) führt.

3. Verschleißbauteil nach Anspruch 1 oder 2, **dadurch gekennzeichnet, dass** der Sensor (61) oder ein Teil des Sensors (61), insbesondere eine Messschaltung (62) des Sensors (61), integraler Bestandteil des berührungslos auslesbaren elektronischen Bauteils ist oder dass der Sensor (61) lösbar, vorzugsweise über eine Steckverbindung, mit dem berührungslos auslesbaren elektronischen Bauteil elektrisch verbunden ist oder dass der Sensor (61) über eine feste elektrische Verbindung mit dem berührungslos auslesbaren elektronischen Bauteil verbunden ist oder dass der Sensor (61) über eine Funkverbindung mit dem berührungslos auslesbaren elektronischen Bauteil verbunden ist.

4. Verschleißbauteil nach einem der Ansprüche 1 bis 3, **dadurch gekennzeichnet, dass** das oder die berührungslos auslesbaren elektronischen Bauteile durch RFID-Transponder (60) gebildet sind.

5. Verschleißbauteil nach Anspruch 4, **dadurch gekennzeichnet, dass** der RFID-Transponder (60) ein passiver RFID-Transponder (60) oder ein aktiver RFID-Transponder (60) oder ein semi-aktiver RFID-Transponder (60) ist.

6. Verschleißbauteil nach einem der Ansprüche 1 bis 5, **dadurch gekennzeichnet, dass** der Sensor (61) durch eine Batterie oder einen Akkumulator des berührungslos auslesbare elektronischen Bauteils oder über die Energie des zum Auslesen des berührungslos auslesbaren Bauelements verwendeten elektromagnetischen Feldes mit Energie versorgt ist.

7. Verschleißbauteil nach einem der Ansprüche 1 bis 6, **dadurch gekennzeichnet, dass** der Messabschnitt (64) des Sensors (61) durch zwei oder mehrere entlang der zu überwachenden Verschleißrichtung (71) beabstandet zueinander angeordnete und parallel zueinander geschaltete elektrische Widerstände (66) gebildet ist.

8. Verschleißbauteil nach einem der Ansprüche 1 bis 6, **dadurch gekennzeichnet, dass** der Messabschnitt (64) des Sensors (61) durch ein Widerstandselement (65) gebildet ist und dass sich der Widerstand des Widerstandselements (65) durch Abrasion des Widerstandselements verändert.

9. Verschleißbauteil nach einem der Ansprüche 1 bis 6, **dadurch gekennzeichnet, dass** der Messabschnitt (64) des Sensors (61) durch einen kapazitiven Messfühler oder durch einen induktiven Messfühler gebildet ist und dass sich die Kapazität des kapazitiven Messfühlers oder die Induktivität des induktiven Messfühlers durch Abrasion des Messfühlers verändert.

10. Verschleißbauteil nach einem der Ansprüche 1 bis 9, **dadurch gekennzeichnet, dass** das zu überwachende Verschleißbauteil ein Meißel (20), ein Meißelhalter (30), ein Basisträger (40) eines Werkzeugsystems (81), ein Auswerfer (81) und/oder eine Verschleißkufe (18) der Fräsmaschine (10) ist.

11. Fräsmaschine (10), insbesondere eine Straßenfräsmaschine, ein Stabilisierer, ein Recycler, ein Surface Miner oder dergleichen, wobei die Fräsmaschine (10) Verschleißbauteile, insbesondere Meißel (20), Meißelhalter (30), Basisträger (40) eines Werkzeugsystems (81), Auswerfer (81) und/oder Verschleißkufen aufweist, **dadurch gekennzeichnet, dass** die Fräsmaschine (10) zumindest ein Verschleißbauteil nach einem der Ansprüche 1 bis 10 aufweist und dass der Fräsmaschine (10) zumindest ein Lesegerät zum berührungslosen Auslesen von in dem oder den berührungslos auslesbaren elektronischen Bauteilen gespeicherten Messdaten des Sensors zugeordnet ist.

12. Fräsmaschine (10) nach Anspruch 11, **dadurch gekennzeichnet, dass** der Sensor (61) oder das berührungslos auslesbare elektronische Bauteil oder das Lesegerät oder eine mit dem Lesegerät verbundene Steuereinheit dazu ausgebildet ist, als Maß für den Verschleiß des Verschleißbauteils eine entlang der zu überwachenden Verschleißrichtung (71) gemessenen Verschleißlänge zwischen einem Bezugspunkt, insbesondere einer Verschleißgrenze (74) des Verschleißbauteils, und einer verschleißenden Oberfläche (72) des Verschleißbauteils zu bestimmen.

13. Fräsmaschine (10) nach Anspruch 12, **dadurch gekennzeichnet, dass** das berührungslos auslesbare elektronische Bauteil oder das Lesegerät oder die Steuereinheit dazu ausgebildet ist, die Verschleißlänge in Abhängigkeit von den Messdaten des zumindest einen Sensors (61) zu bestimmen.

14. Fräsmaschine (10) nach einem der Ansprüche 11 bis 13, **dadurch gekennzeichnet, dass** das Lesegerät ein RFID-Lesegerät ist.

15. Verfahren zur Bestimmung des Verschleißes eines gemäß Anspruch 1 ausgeführten Verschleißbauteils einer Fräsmaschine (10), insbesondere einer Straßenfräsmaschine,
eines Stabilisierers, eines Recyclers, eines Surface Miners oder dergleichen, wobei dem Verschleißbauteil zumindest ein berührungslos auslesbares elektronisches Bauteil zugeordnet ist, wobei Daten des zumindest einen berührungslos auslesbaren elektronischen Bauteils von einem Lesegerät berührungslos ausgelesen werden, und wobei an Hand der ausgelesenen Daten der Verschleiß des Verschleißbauteils bestimmt wird,
**dadurch gekennzeichnet,**
**dass** entlang einer zu überwachenden Verschleißrichtung (71) eine Verschleißlänge des Verschleißbauteils als Strecke zwischen einem Bezugspunkt, insbesondere einer Verschleißgrenze (74) des Verschleißbauteils, und einer verschleißenden Oberfläche (72) des Verschleißbauteils oder ein mit der Verschleißlänge korrelierendes Maß ermittelt und berührungslos ausgelesen wird.

16. Verfahren nach Anspruch 15, **dadurch gekennzeichnet, dass** ein Messabschnitt (64) des Sensors (61) bei fortschreitendem Verschleiß des Verschleißbauteils mit abgetragen wird, wodurch sich ein Messsignal des Sensors (61) ändert, und dass aus dem Messsignal die Verschleißlänge bestimmt wird oder dass das Messsignal das mit der Verschleißlänge korrelierende Maß bildet.

17. Verfahren nach Anspruch 15 oder 16, **dadurch gekennzeichnet, dass** der Sensor (61) über eine Batterie oder über einen Akkumulator oder über ein zum Auslesen des berührungslos auslesbaren Bauelements verwendetes elektromagnetisches Feld mit Energie versorgt wird.

18. Verfahren nach einem der Ansprüche 15 bis 17, **dadurch gekennzeichnet, dass** die Verschleißlänge eines Verschleißbauteils oder die Verschleißlängen mehrerer Verschleißbauteile von einer Anzeigeeinheit angezeigt werden und/oder dass in Abhängigkeit von der Verschleißlänge eines Verschleißbauteils oder den Verschleißlängen mehrerer Verschleißbauteile geeignete Maschinenparameter zum Betrieb der Fräsmaschine (10) von der Anzeigeeinheit angezeigt oder vorgegeben werden und/oder dass in Abhängigkeit von der Verschleißlänge eines Verschleißbauteils oder den Verschleißlängen mehrerer Verschleißbauteile mit der Fräsmaschine (10) ohne Wechsel des Verschleißbauteils oder der Verschleißbauteile durchführbare Fräsaufgaben oder die erreichbare Qualität bei der Ausführung verschiedener Fräsaufgaben ohne Wechsel des Verschleißbauteils oder der Verschleißbauteile von der Anzeigeeinheit angezeigt werden.

19. Verfahren nach einem der Ansprüche 15 bis 18, **dadurch gekennzeichnet, dass** in Abhängigkeit von der ermittelten Verschleißlänge von an verschiedenen Positionen an der Fräsmaschine (10) eingesetzten, gleichen Verschleißbauteilen ein gegenseitiges Austauschen der Verschleißbauteile vorgeschlagen und/oder angezeigt wird.

20. Verfahren nach einem der Ansprüche 15 bis 19, **dadurch gekennzeichnet, dass** das Lesegerät an einem zur Montage und/oder zur Demontage eines Meißels (20) verwendeten Werkzeugs angeordnet ist und dass die Verschleißlänge oder das mit der Verschleißlänge korrelierende Maß beim Wechseln eines Meißels (20) berührungslos von dem Lesegerät ausgelesen wird.

## Claims

1. A wear component for a milling machine (10), in particular for a road milling machine, a stabilizer, a recycler, a surface miner, or the like, the wear component having associated with it at least one contactlessly readable electronic component for determining the wear on the wear component,
wherein at least one sensor (61) is connected to the at least one contactlessly readable electronic component for the transfer of data, wherein the contactlessly readable electronic component is embodied to receive measured data of the sensor (61) and furnish them for contactless reading, wherein at least one measurement portion (64) of the sensor (61) is guided, along at least one wear direction (71) to be monitored, into a wear region (70) or along the wear region (70) of the wear component, **characterized**
**in that** the at least one contactlessly readable electronic component is arranged outside the wear region of the wear component in a recess (35) within the wear component,
and **in that** the measurement portion (64) of the sensor (61) is arranged within at least one recess (35) in the wear region (70) of the wear component.

2. The wear component according to Claim 1, wherein abrasion of the measurement portion (64) results in a continuous or discontinuous change in a measurement signal of the sensor (61).

3. The wear component according to Claim 1 or 2, wherein the sensor (61) or a part of the sensor (61), in particular a measurement circuit (62) of the sensor (61), is an integral constituent of the contactlessly readable electronic component; or the sensor (61) is electrically connected to the contactlessly readable electronic component detachably, preferably via a plug connection; or the sensor (61) is connected to the contactlessly readable electronic component via a fixed electrical connection; or the sensor (61) is connected to the contactlessly readable electronic component via a radio connection.

4. The wear component according to one of Claims 1 to 3, wherein the contactlessly readable electronic component or components are constituted by RFID transponders (60).

5. The wear component according to Claim 4, wherein the RFID transponder (60) is a passive RFID transponder (60) or an active RFID transponder (60) or a semiactive RFID transponder (60).

6. The wear component according to one of Claims 1 to 5, wherein the sensor (61) is supplied with energy by a primary battery or rechargeable battery of the contactlessly readable electronic component, or via the energy of the electromagnetic field used to read out the contactlessly readable component

7. The wear component according to one of Claims 1 to 6, wherein the measurement portion (64) of the sensor (61) is constituted by two or more electrical resistors (66), connected in parallel with one another and arranged with a spacing from one another along the wear direction (71) that is to be monitored.

8. The wear component according to one of Claims 1 to 6, wherein the measurement portion (64) of the sensor (61) is constituted by a resistance element (65); and the resistance of the resistance element (65) changes as a result of abrasion of the resistance element.

9. The wear component according to one of Claims 1 to 6, wherein the measurement portion (64) of the sensor (61) is constituted by a capacitive sensing element or by an inductive sensing element; and the capacitance of the capacitive sensing element or the inductance of the inductive sensing element changes as a result of abrasion of the sensing element.

10. The wear component according to one of Claims 1 to 9, wherein the wear component to be monitored is a bit (20), a bit holder (30), a base carrier (40) of a tool system (81), an ejector (81) and/or a wear runner (18) of the milling machine (10).

11. A milling machine (10), in particular a road milling machine, a stabilizer, a recycler, a surface miner, or the like, the milling machine (10) comprising wear components, in particular bits (20), bit holders (30), base carriers (40) of a tool system (81), ejectors (81), and/or wear runners,
wherein the milling machine (10) comprises at least one wear component according to one of Claims 1 to 10; and the milling machine (10) has associated with it at least one reading device for contactlessly reading out measured data of the sensor which are stored in the contactlessly readable electronic component or components.

12. The milling machine (10) according to Claim 11, wherein the sensor (61) or the contactlessly readable electronic component or the reading device or a control unit connected to the reading device is embodied to determine, as a measure of the wear on the wear component, a wear length, measured along the wear direction (71) to be monitored, between a reference point, in particular a wear limit (74) of the wear component, and a wearing surface (72) of the wear component.

13. The milling machine (10) according to Claim 12, wherein the contactlessly readable electronic component or the reading device or the control unit is embodied to determine the wear length as a function of the measured data of the at least one sensor (61).

14. The milling machine (10) according to one of Claims 11 to 13, wherein the reading device is an RFID reading device.

15. A method for determining the wear on a wear component of a milling machine (10), in particular of a road milling machine, a stabilizer, a recycler, a surface miner, or the like, the wear component being configured according to claim 1; the wear component having associated with it at least one contactlessly readable electronic component; data of the at least one contactlessly readable electronic component being contactlessly readable by a reading device; and the wear on the wear component being determined based on the read-out data.
wherein a wear length of the wear component along a wear direction (71) to be monitored, constituting a distance between a reference point, in particular a wear limit (74) of the wear component, and a wearing surface (72) of the wear component, or a magnitude correlating with the wear length, is ascertained and is contactlessly read out.

16. The method according to Claim 15, wherein a measurement portion (64) of the sensor (61) is also worn away as wear on the wear component proceeds, with the result that a measurement signal of the sensor (61) changes; and the wear length is determined from the measurement signal; or the measurement signal constitutes the magnitude correlating with the wear length.

17. The method according to Claim 15 or 16, wherein the sensor (61) is supplied with energy via a primary battery or via a rechargeable battery or via an electromagnetic field used to read out the contactlessly readable component.

18. The method according to one of Claims 15 to 17, wherein the wear length of a wear component, or the wear lengths of several wear components, are displayed by a display unit; and/or as a function of the wear length of a wear component, or the wear lengths of several wear components, suitable machine parameters for operating the milling machine (10) are displayed or defined by the display unit; and/or as a function of the wear length of a wear component, or the wear lengths of several wear components, milling tasks executable using the milling machine (10) without replacement of the wear component or components, or the quality achievable upon execution of various milling tasks without replacement of the wear component or components, are displayed by the display unit.

19. The method according to one of Claims 15 to 18, wherein depending on the ascertained wear length of identical wear components used at different positions on the milling machine (10), a mutual exchange of the wear components is suggested and/or displayed.

20. The method according to one of Claims 15 to 19, wherein the reading device is arranged on a tool used for installation and/or deinstallation of a bit (20); and the wear length, or the magnitude correlating with the wear length, is read out contactlessly by the reading device upon replacement of a bit (20).

## Revendications

1. Composant d'usure pour une machine de fraisage (10), en particulier pour une machine de fraisage routier, un stabilisateur, un recycleur, un mineur de surface ou similaire, dans lequel au moins un composant électronique lisible sans contact est associé au composant d'usure pour déterminer l'usure du composant d'usure, au moins un capteur (61) étant relié à l'au moins un composant électronique lisible sans contact pour la transmission de données, le composant électronique lisible sans contact étant conçu pour recevoir des données de mesure du capteur (61) et les mettre à disposition pour une lecture sans contact,
au moins une section de mesure (64) du capteur (61) étant guidée le long d'au moins une direction d'usure (71) à surveiller dans une zone d'usure (70) du composant d'usure,
**caractérisé**
**en ce que** le au moins un composant électronique lisible sans contact est disposé à l'extérieur de la zone d'usure du composant d'usure, dans un évidement à l'intérieur du composant d'usure,
et **en ce que** la section de mesure (64) du capteur (61) est disposée à l'intérieur d'au moins un évidement (35) dans la zone d'usure (70) du composant d'usure.

2. Composant d'usure selon la revendication 1, **caractérisé en ce qu'**une abrasion de la section de mesure (64) entraîne une variation continue ou une variation discontinue d'un signal de mesure du capteur (61).

3. Composant d'usure selon la revendication 1 ou 2, **caractérisé en ce que** le capteur (61) ou une partie du capteur (61), en particulier un circuit de mesure (62) du capteur (61), fait partie intégrante du composant électronique lisible sans contact ou **en ce que** le capteur (61) est amovible, de préférence par l'intermédiaire d'une connexion enfichable, est relié électriquement au composant électronique lisible sans contact, ou que le capteur (61) est relié au composant électronique lisible sans contact par une liaison électrique fixe, ou que le capteur (61) est relié au composant électronique lisible sans contact par une liaison radio.

4. Composant d'usure selon l'une des revendications 1 à 3, **caractérisé en ce que** le ou les composants électroniques lisibles sans contact sont formés par des transpondeurs RFID (60).

5. Composant d'usure selon la revendication 4, **caractérisé en ce que** le transpondeur RFID (60) est un transpondeur RFID passif (60) ou un transpondeur RFID actif (60) ou un transpondeur RFID semi-actif (60).

6. Composant d'usure selon l'une des revendications 1 à 5, **caractérisé en ce que** le capteur (61) est alimenté en énergie par une pile ou un accumulateur du composant électronique lisible sans contact ou par l'énergie du champ électromagnétique utilisé pour la lecture du composant éléctronique lisible sans contact.

7. Composant d'usure selon l'une des revendications 1 à 6, **caractérisé en ce que** la section de mesure (64) du capteur (61) est formée par deux ou plusieurs résistances électriques (66) disposées à distance les unes des autres le long de la direction d'usure (71) à surveiller et montées en parallèle.

8. Composant d'usure selon l'une des revendications 1 à 6, **caractérisé en ce que** la section de mesure (64) du capteur (61) est formée par un élément résistif (65) et **en ce que** la résistance de l'élément résistif (65) est modifiée par l'abrasion de l'élément résistif.

9. Composant d'usure selon l'une des revendications 1 à 6, **caractérisé en ce que** la section de mesure (64) du capteur (61) est formée par un capteur de mesure capacitif ou par un capteur de mesure inductif, et **en ce que** la capacité du capteur de mesure capacitif ou l'inductance du capteur de mesure inductif est modifiée par abrasion du capteur de mesure.

10. Composant d'usure selon l'une des revendications 1 à 9, **caractérisé en ce que** le composant d'usure à surveiller est un pic (20), un support de base (30), un support de base (40) d'un système d'outils (81), un éjecteur (81) et/ou un patin d'usure (18) de la machine de fraisage (10).

11. Machine de fraisage (10), en particulier une machine de fraisage routier, un stabilisateur, un recycleur, un mineur de surface ou similaire, la machine de fraisage (10) présentant des composants d'usure, en particulier des pics (20), des porte-pics (30), des supports de base (40) d'un système d'outils (81), des éjecteurs (81) et/ou des patins d'usure, **caractérisé en ce que** la machine de fraisage (10) comporte au moins un composant d'usure selon l'une des revendications 1 à 10 et **en ce qu'**à la machine de fraisage (10) est associé au moins un appareil de lecture pour la lecture sans contact de données de mesure du capteur enregistrées dans le ou les composants électroniques lisibles sans contact.

12. Machine de fraisage (10) selon la revendication 11, **caractérisée en ce que** le capteur (61) ou le composant électronique lisible sans contact ou l'appareil de lecture ou une unité de commande reliée à l'appareil de lecture est conçu pour déterminer, comme mesure de l'usure du composant d'usure, une longueur d'usure mesurée le long de la direction d'usure (71) à surveiller, entre un point de référence, en particulier une limite d'usure (74) du composant d'usure, et une surface d'usure (72) du composant d'usure.

13. Machine de fraisage (10) selon la revendication 12, **caractérisée en ce que** le composant électronique lisible sans contact ou l'appareil de lecture ou l'unité de commande est configuré pour déterminer la longueur d'usure en fonction des données de mesure de l'au moins un capteur (61).

14. Machine de fraisage (10) selon l'une des revendications 11 à 13, **caractérisée en ce que** l'appareil de lecture est un appareil de lecture RFID.

15. Procédé de détermination de l'usure d'un composant d'usure réalisé selon la revendication 1 d'une machine de fraisage (10), en particulier d'une machine de fraisage routier, d'un stabilisateur, d'un recycleur, d'un mineur de surface ou similaire, au moins un composant électronique lisible sans contact étant associé au composant d'usure, des données du au moins un composant électronique lisible sans contact étant lues sans contact par un appareil de lecture, et l'usure du composant d'usure étant déterminée sur la base des données lues,
**caractérisé**
**en ce que**, le long d'une direction d'usure (71) à surveiller, une longueur d'usure du composant d'usure est déterminée en tant que distance entre un point de référence, en particulier une limite d'usure (74) du composant d'usure, et une surface d'usure (72) du composant d'usure ou une mesure en corrélation avec la longueur d'usure, et est lue sans contact.

16. Procédé selon la revendication 15, **caractérisé en ce qu'**une section de mesure (64) du capteur (61) est enlevée en même temps que l'usure du composant d'usure progresse, ce qui modifie un signal de mesure du capteur (61), et **en ce que** la longueur d'usure est déterminée à partir du signal de mesure ou **en ce que** le signal de mesure forme la mesure en corrélation avec la longueur d'usure.

17. Procédé selon la revendication 15 ou 16, **caractérisé en ce que** le capteur (61) est alimenté en énergie par une pile ou par un accumulateur ou par un champ électromagnétique utilisé pour la lecture du composant lisible sans contact.

18. Procédé selon l'une des revendications 15 à 17, **caractérisé en ce que** la longueur d'usure d'un composant d'usure ou les longueurs d'usure de plusieurs composants d'usure sont affichées par une unité d'affichage et/ou **en ce que**, en fonction de la longueur d'usure d'un composant d'usure ou des longueurs d'usure de plusieurs composants d'usure, des paramètres machine appropriés pour le fonctionnement de la machine de fraisage (10) sont affichés ou prédéfinis par l'unité d'affichage et/ou **en ce que**, en fonction de la longueur d'usure d'un composant d'usure, des paramètres machine appropriés pour le fonctionnement de la machine de fraisage (10) sont affichés ou prédéfinis par l'unité d'affichage. en fonction de la longueur d'usure d'un composant d'usure ou des longueurs d'usure de plusieurs composants d'usure, des tâches de fraisage réalisables avec la machine de fraisage (10) sans changer le ou les composants d'usure ou la qualité réalisable lors de l'exécution de différentes tâches de fraisage sans changer le ou les composants d'usure sont affichées par l'unité d'affichage.

19. Procédé selon l'une des revendications 15 à 18, **caractérisé en ce que**, en fonction de la longueur d'usure déterminée de composants d'usure identiques utilisés en différentes positions sur la machine de fraisage (10), un remplacement mutuel des composants d'usure est proposé et/ou affiché.

20. Procédé selon l'une des revendications 15 à 19, **caractérisé en ce que** l'appareil de lecture est disposé sur un outil utilisé pour le montage et/ou le démontage d'un pic (20) et **en ce que** la longueur d'usure ou la mesure corrélée à la longueur d'usure est lue sans contact par l'appareil de lecture lors du changement d'un pic (20).
